# EUROPEAN PATENT APPLICATION

(11) **EP 2 424 251 A2**
(43) Date of publication of application: **29.02.2012**
(21) Application number: 11006886.3
(22) Date of filing: 23.08.2011
(51) Int. Cl.: H04N 13/00

(54) **Method for providing 3d video data in a 3dtv**

(30) Priority: 23.08.2010 US 376250
(71) Applicant: LG ELECTRONICS INC., Yeongdeungpo-gu Seoul 150-721 (KR)
(72) Inventor: Lee, Joonhui, Seocho-gu Seoul 137-724 (KR); Choe, Jeehyun, Seocho-gu Seoul 137-724 (KR); Suh, Jongyeul, Seocho-gu Seoul 137-724 (KR); Yang, Jeonghyu, Seocho-gu Seoul 137-724 (KR)
(74) Representative: Frenkel, Matthias Alexander

(57) **Abstract**

A broadcast receiver and a 3D video data processing method thereof are disclosed herein a 3D video data processing method of a broadcast receiver according to an embodiment of the present invention includes receiving, by a receiving unit, a broadcast signal including 3D video data and 3D complementary video information, wherein the 3D video data include half-resolution base video data and complementary video data for configuring a full-resolution image; parsing, by 3D video information processing unit, a 3D complementary video information; decoding, by a base video decoder, the half-resolution base video data; decoding, by a complementary video decoder, the complementary video data for configuring a full-resolution image; acquiring and storing by a Program and System Information Protocol (PSIP) processor 3D complementary video information through 3D complementary video descriptor in Event Information Table (EIT); and combining and formatting, by an output formatter, the base video data and the complementary video data using the 3D complementary video information, thereby outputting a full-resolution 3D image.

## Description

### BACKGROUND OF THE INVENTION

### Field of the Invention

The present invention relates to a device and method for processing broadcast signals and, more particularly, to a broadcast receiver processing video data of full-resolution in a 3D broadcasting system and a 3D video data processing method thereof.

### Discussion of the Related Art

A 3-dimensions (3D) image (or stereoscopic image) provides a cubic effect by using the principles of stereoscopic vision of both human eyes. A human being (or individual) senses perspective through a parallax between both eyes, in other words, a binocular parallax caused by the two eyes of an individual being spaced apart at a distance of approximately 65 millimeters (mm). Therefore, a 3D image may provide a cubic effect and perspective by providing an image enabling and a flat image associated with both the left eye and the right eye to be viewed.

Methods for displaying such 3D image include a stereoscopic method, a volumetric method, a holographic method, and so on. In case of the stereoscopic method, a left view image that is to be viewed by the left eye and a right view image that is to be viewed by the right eye are provided, and each of the left eye and the right eye respectively views the left view image and the right view image through polarized glasses or through a display equipment, thereby enabling the viewer to acknowledge the 3D effect.

### SUMMARY OF THE INVENTION

Accordingly, the present invention is directed to a method for providing 3D TV that substantially obviates one or more problems due to limitations and disadvantages of the related art.

An object of the present invention is to provide a broadcast receiver and a 3D video data processing method thereof is disclosed herein. A 3D video data processing method of a broadcast receiver according to an embodiment of the present invention includes receiving, by a receiving unit, a broadcast signal including 3D video data and 3D complementary video information, wherein the 3D video data include half-resolution base video data and complementary video data for configuring a full-resolution image; parsing, by 3D video information processing unit, a 3D complementary video information; decoding, by a base video decoder, the half-resolution base video data; decoding, by a complementary video decoder, the complementary video data for configuring a full-resolution image; acquiring and storing by a Program and System Information Protocol (PSIP) processor 3D complementary video information through 3D complementary video descriptor in Event Information Table (EIT); and combining and formatting, by an output formatter, the base video data and the complementary video data using the 3D complementary video information, thereby outputting a full-resolution 3D image.

Another object of the present invention is to provide a broadcast receiver having a receiving unit receiving a broadcast signal including 3D video data and 3D complementary video information, wherein the 3D video data include half-resolution base video data and complementary video data for configuring a full-resolution image, a 3D video information processing unit parsing the 3D complementary video information, a base video decoder decoding the half-resolution base video data, a complementary video decoder decoding the complementary video data for configuring a full-resolution image, a Program and System Information Protocol (PSIP) processor acquiring and storing 3D complementary video information through 3D complementary video descriptor in Event Information Table (EIT), and an output formatter combining and formatting the base video data and the complementary video data using the 3D complementary video information, thereby outputting a full-resolution 3D image.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings;

FIG. 1 illustrates a stereoscopic image multiplexing format of a variety of image formats according to an embodiment of the present invention;

FIG. 2 illustrates a conceptual diagram of a 3D broadcast service according to an embodiment of the present invention;

FIG. 3 illustrates a conceptual block diagram showing a method for providing a full-resolution 3D broadcast service according to an embodiment of the present invention;

FIG. 4 illustrates a method for providing a 3D broadcast service according to an embodiment of the present invention;

FIG. 5 illustrates a method for providing a 3D broadcast service according to another embodiment of the present invention;

FIG. 6 illustrates a method for providing a 3D broadcast service according to another embodiment of the present invention;

FIG. 7 illustrates a method for providing a 3D broadcast service according to another embodiment of the present invention;

FIG. 8 illustrates the full forward and backward interoperability for providing a 3D broadcast service according to an embodiment of the present invention;

FIG. 9 illustrates a service model of a 3D broadcast service compatible for first generation and second generation 3DTV.

FIG. 10 illustrates a syntax structure of a TVCT including 3D complementary video information according to an embodiment of the present invention;

FIG. 11 illustrates a syntax structure of a 3D complementary video descriptor included in a TVCT according to an embodiment of the present invention;

FIG. 12 illustrates an image configuration method according to a field value of a complementary_type field included in 3D complementary video information according to an embodiment of the present invention.

FIG. 13 illustrates a syntax structure of a PMT including 3D complementary video information according to an embodiment of the present invention;

FIG. 14 illustrates a syntax structure of a PMT including a 3D complementary video information according to another embodiment of the present invention;

FIG. 15 illustrates a syntax structure of a Picture Extension and user Data of a video ES included 3D complementary video information according to an embodiment of the present invention;

FIG. 16 illustrates a Supplemental Enhancement Information (SEI) syntax structure of a user identifier and structure for decoding 3D complementary video information according to an embodiment of the present invention;

FIG. 17 illustrates a method for providing a full-resolution image using base video data, complementary video data, and 3D complementary video information received from a 3D video service Spec-B according to an embodiment of the present invention;

FIG. 18 illustrates a method for providing a full-resolution image using base video data, complementary video data, and 3D complementary video information received from a 3D video service Spec-B according to another embodiment of the present invention;

FIG. 19 illustrates a method for providing a full-resolution image using base video data, complementary video data, and 3D complementary video information received from a 3D video service Spec-B according to yet another embodiment of the present invention;

FIG. 20 illustrates a method for providing a full-resolution image using base video data, complementary video data, and 3D complementary video information received from a 3D video service Spec-B according to yet another embodiment of the present invention;

FIG. 21 illustrates a method of signaling a 3D broadcast service using Service Descriptor Table (SDT) according to an embodiment of the present invention;

FIG. 22 illustrates a service type values for signaling 3DTV service using SDT according to an embodiment of the present invention;

FIG. 23 illustrates additional service type values and descriptions for signaling 3DTV service using SDT according to an embodiment of the present invention;

FIG. 24 illustrates component descriptor indicating each elementary stream for DVB broadcast service according to an embodiment of the present invention;

FIG. 25 illustrates stream content, component type, and description for indicating a full-resolution 3D stereoscopic service in a DVB broadcast system according to an embodiment of the present invention;

FIG. 26 illustrates a syntax structure of a 3D complementary video descriptor for SDT according to an embodiment of the present invention;

FIG. 27 illustrates a method of signaling Spec-A and Spec-B 3D service using linkage descriptor according to an embodiment of the present invention;

FIG. 28 illustrates a flowchart indicating a process of outputting stereoscopic video signal by parsing 3D signal information according to an embodiment of the present invention;

FIG. 29 illustrates a method of signaling Spec-A and Spec-B 3D service using linkage descriptor according to another embodiment of the present invention;

FIG. 30 illustrates information on full-resolution 3DTV service located in ATSC PSIP EIT section according to an embodiment of the present invention;

FIG. 31 illustrates information on a full-resolution 3DTV service located in DVB SI EIT section according to an embodiment of the present invention;

FIG. 32 illustrates a flowchart indicating a process for outputting stereoscopic video signal by parsing 3D complementary video descriptor and rendering using ATSC PSIP EIT according to an embodiment of the present invention;

FIG. 33 illustrates a flowchart indicating a process for outputting stereoscopic video signal by parsing 3D complementary video descriptor and rendering using DVB SI EIT according to an embodiment of the present invention; and

FIG. 34 illustrates a block diagram of broadcasting receiver having a 3D video decoder according to an embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

Although the terms used in the present invention are selected from generally known and used terms, some of the terms mentioned in the description of the present invention may be varied by anyone skilled in the art at his or her discretion, according to custom, or due to the advent of new technologies. Also, in some cases, some of the terms mentioned in the description of the present invention have been selected by the applicant at his or her discretion and, in these cases, the detailed meanings are described in relevant parts of the description of the present invention is understood not simply by the mere naming of the terms used herein but by the actual meaning of each term lying within and, also, based upon the overall content of the description of the present invention.

3D image presentation methods include a stereoscopic image method, which takes into account two perspectives (or viewpoints), and a multiple view image method, which takes into account three or more perspectives (or viewpoints). Conversely, the related art single view image type may be referred to as a monoscopic method.

A stereoscopic image method uses a left/right pair of images acquired by photographing the same subject with a left-side camera and a right-side camera, wherein both cameras are spaced apart from one another at a predetermined distance. A multiview image uses a set of at least 3 images acquired by photographing with at least 3 different cameras either spaced apart from one another at predetermined distances or placed at different angles. Hereinafter, although the stereoscopic method will be described according to an embodiment of the present invention, the ideas of the present invention may also be applied to the multi-view method. Also, hereinafter, the term stereoscopic may also be shortened to stereo.

The stereoscopic image or the multi-view image may be compression encoded in an MPEG (Moving Picture Experts Group) format or by using diverse methods, thereby being transmitted.

For example, a stereoscopic image or a multi-view image may be compression-encoded by using an H.264/AVC (Advanced Video Coding) method, thereby being transmitted. At this point, the receiving system performs a decoding process on the received image as an inverse process for the H.264/AVC method, thereby acquiring a 3D image.

Furthermore, any one of the left view image or the right view image of the stereoscopic image or any one image of the multi-view image may be assigned as a base layer image, and the remaining image may be assigned as an enhancement layer image. Thereafter, the image of the base layer may be encoded by using the same method used for encoding a monoscopic image. And, in the image of the enhancement layer, only the relation information between the base layer image and the enhancement layer image may be encoded. Then, the processed images may be transmitted.

Examples of the compression-encoding methods for the base layer image may include JPEG, MPEG-1, MPEG-2, MPEG-4, and H.264/AVC. And, in this embodiment of the present invention, the H.264/AVC method has been adopted. Furthermore, according to the embodiment of the present invention, the H.264/SVC (Scalable Video Coding) or MVC (Multi-view Video Coding) method has been adopted for the compression-encoding process of the enhancement layer image.

The conventional standard for groundwave (or terrestrial) DTV transmission and reception is based upon 2D video content. Accordingly, in order to service 3D TV broadcast content, a transmission and reception standard for 3D TV broadcast content should be additionally defined. A receiver may receive a broadcast signal in accordance with the added transmission and reception standard, so as to adequately process the received signal, thereby supporting a 3D broadcast service.

In the description of the present invention, the ATSC (Advanced Television Systems Committee) standard will be used to describe the conventional DTV transmission and reception standard according to the embodiment of the present invention.

In case of the ATSC system, information for processing a broadcast content may be included in the system information, thereby being transmitted.

The system information may, for example, be referred to as service information. Herein, for example, the system information may include channel information, program information, event information, and so on. In case of the ATSC standard method, the system information may be transmitted and received by being included in a PSI/PSIP (Program Specific Information/Program and System Information Protocol). However, the present invention will not be limited only to this example. And, in case of a protocol transmitting the system information in a table format, the protocol may be applied to the present invention regardless of its term (or name).

According to an embodiment of the present invention, the PSI table may include a PAT (Program Association Table), and a PMT (Program Map Table).

The PAT corresponds to special information that is transmitted by a data packet having a PID of '0'. The PAT may transmit PID information of the corresponding PMT for each program. The PMT transmits PID information of a transport stream (TS) packet, in which program identification numbers and individual bit sequences of video and audio data configuring the corresponding program are transmitted, and also transmits the PID information in which PCR is transmitted. Then, by parsing the PMT acquired from the PAT, the correlation information between the elements configuring the corresponding program may also be acquired.

According to an embodiment of the present invention, the PSIP table may include a VCT (Virtual Channel Table), an STT (System Time Table), an RRT (Rating Region Table), an ETT (Extended Text Table), a DCCT (Direct Channel Change Table), a DDCSCT (Direct Channel Change Selection Code Table), an EIT (Event Information Table), and an MGT (Master Guide Table).

The VCT may transmit information on virtual channels, such as channel information for selecting channels and information such as PIDs (Packet Identifiers) for receiving the audio and/or video data. More specifically, when the VCT is parsed, the PID of the audio/video data of the broadcast program, which is carried through the channel along with the channel name and the channel number, may be acquired. The STT may transmit information on the current data and timing information, and the RRT may transmit information on region and consultation organs for program ratings. The ETT may transmit additional description of a specific channel and broadcast program, and the EIT may transmit information on virtual channel events. The DCCT/DCCSCT may transmit information associated with automatic (or direct) channel change, and the MGT may transmit the version and PID information of each table within the PSIP.

The transmission format of the stereoscopic image includes a single video stream format and a multi-video stream format. The single video stream format corresponds to a method of multiplexing video data of two perspectives into a single video stream and transmitting the single video stream. Herein, since video data are transmitted to one video stream, the single video stream format is advantageous in that a bandwidth being additionally required for providing a 3D broadcast service is not broad. The multivideo stream format corresponds to a method of transmitting multiple video data to multiple video streams. Herein, although the usage of the bandwidth increases, since high capacity data can be transmitted, the multi-video stream format is advantageous in that high picture quality video data can be displayed.

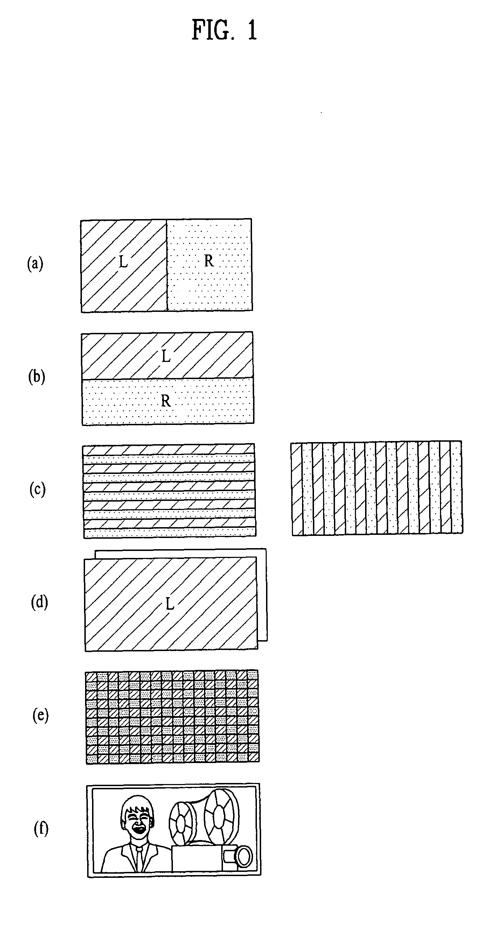

FIG. 1 shows a stereoscopic image multiplexing format of a variety of image formats according to an embodiment of the present invention.

The image formats of a 3D broadcast service include a side-by-side format shown in (a), a top-bottom format shown in (b), an interlaced format shown in (c), a frame sequential format shown in (d), a checker board format shown in (e), and an anaglyph format shown in (f).

The side-by-side format shown in (a) corresponds to a format, wherein a left image and a right image are 1/2 down-sampled in a horizontal direction. Herein, one of the sampled images is positioned on the left side, and the other sampled image is positioned on the right side, thereby creating a single stereoscopic image. The top-bottom format shown in (b) corresponds to a format, wherein a left image and a right image are 1/2 down-sampled in a vertical direction. Herein, one of the sampled images is positioned on the upper side, and the other sampled image is positioned on the lower side, thereby creating a single stereoscopic image. The interlaced format shown in (c) corresponds to a format, wherein a left image and a right image are 1/2 down-sampled in a horizontal direction so that the two images can be alternated line by line, thereby creating a single stereoscopic image, or wherein a left image and a right image are 1/2 down-sampled in a vertical direction so that the two images can be alternated line by line, thereby creating a single stereoscopic image. The frame sequential format shown in (d) corresponds to a format, wherein a left image and a right image are temporally alternated and configured in a single video stream. The checker board format shown in (e) corresponds to format, wherein a left image and a right image are 1/2 down-sampled so that the left image and the right image can be alternated in each of the horizontal and vertical directions, thereby configuring the two images into a single image. The anaglyph format shown in (f) corresponds to a format configuring an image so that the image can present a cubic effect by using complementary color contrast.

The present digital broadcasting provides broadcast services by using limited system resources. The system resources of a digital broadcasting environment include transmission bandwidth, processing capability, and so on. Particularly, the bandwidth that can be used in the assignment (or allocation) of a frequency is limited. In such a digital broadcasting environment, when a 3D broadcast service is provided, the corresponding 3D broadcast service will also use the limited resources used in the digital broadcasting environment.

According to an embodiment of the present invention, in case of a 3D broadcast service using a stereoscopic image scheme, a left-view image and a right-view image should be transmitted. Therefore, it is difficult to transmit the two images at a high resolution by using the bandwidth of the conventional digital broadcasting. For example, when transmitting full-resolution video data using a bandwidth of digital broadcasting, it is difficult to transmit 2 sets of full-resolution video data by using the same bandwidth. Therefore, a method of transmitting 2 sets of half-resolution video data is being proposed.

Nevertheless, a full-resolution 3D broadcast service is required to be provided so as to satisfy the demands of the user for high picture quality. However, even when a full-resolution 3D broadcast service is being provided, the full-resolution 3D broadcast service should be compatible to the conventional half-resolution 3D broadcast service.

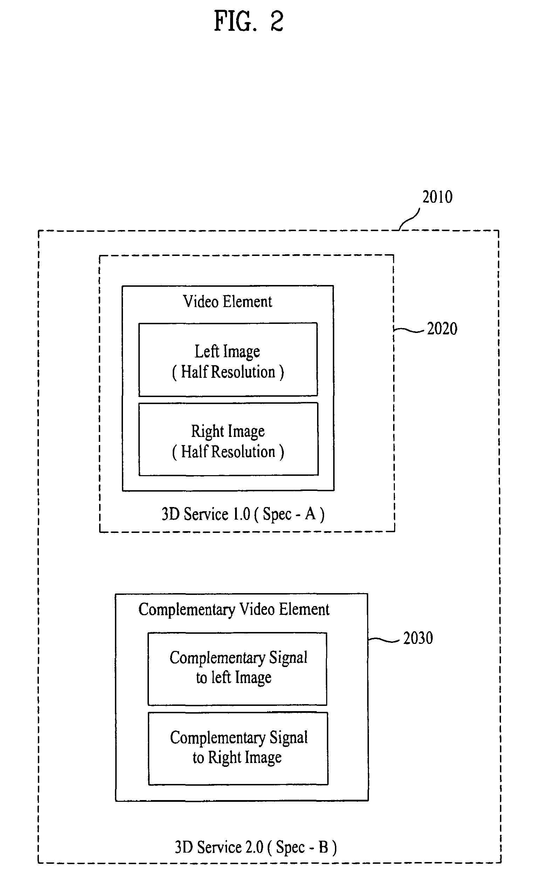

FIG. 2 shows a conceptual diagram of a 3D broadcast service according to an embodiment of the present invention. According to an embodiment of FIG. 2, a 3D broadcast service (2010) providing full-resolution images may hereinafter be referred to as a 3D service 2.0 or a 3D service Spec-B. A 3D broadcast service (2020) providing half-resolution images may hereinafter be referred to as a 3D service 1.0 or a 3D service Spec-A.

The 3D service 1.0 (2020) may be serviced to a half-resolution left image and to a half-resolution right image. Since the 3D service 2.0 (2010) providing full-resolution images should be compatible to the 3D service 1.0 (2020), instead of newly transmitting full-resolution images, a method of maintaining the image transmission of the 3D service 1.0 (2020) and providing differential data or additional data for providing full-resolution images may be used. More specifically, as shown in FIG. 2, a full-resolution 3D broadcast service (2010) may be provided by adding a complementary video element (2030) of the 3D service 2.0 to a half-resolution video element of the 3D service 1.0 (2020). Eventually, a broadcast receiver that can support 3D service 1.0 may provide half-resolution images by receiving and processing data of the 3D service 1.0 (2020), and a broadcast receiver that can support 3D service 2.0 may provide full-resolution images by receiving and processing data of the 3D service 1.0 (2020)and complementary data of the 3D service 2.0.

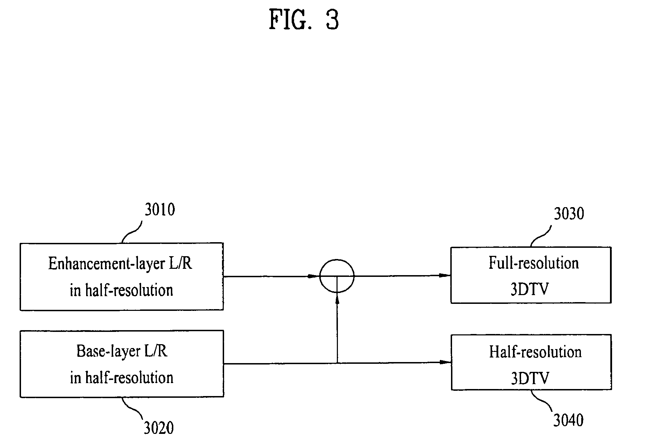

FIG. 3 illustrates a conceptual block diagram showing a method for providing a full-resolution 3D broadcast service according to an embodiment of the present invention.

In the present invention, a digital broadcast receiver (3030) that can provide full-resolution 3D images and a digital broadcast receiver (3040) that can support half-resolution 3D images may each be provided.

A broadcasting system providing 3D broadcast services may transmit half-resolution 3D video data through a base layer (3020) and may transmit additional half-resolution 3D video data for providing full-resolution 3D images through an enhancement layer (3010).

The digital broadcast receiver (3040) that can support half-resolution 3D images may provide half-resolution 3D images by receiving and processing video data of the base layer (3020). Also, the digital broadcast receiver (3030) that can provide full-resolution 3D images may provide full-resolution 3D images by receiving and processing video data of the base layer (3020) and video data of the enhancement layer (3010). Hereinafter, the video data or video component of the base layer may be respectively referred to as base video data or a base video component, and the video data or video component of the enhancement layer may be respectively referred to as complementary video data or a complementary video component, for simplicity.

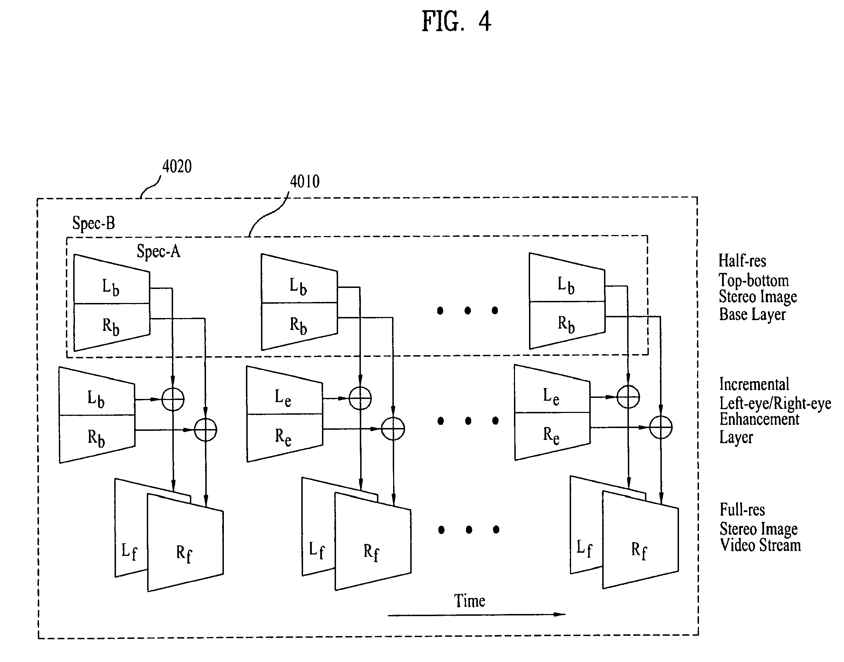

FIG. 4 illustrates a method for providing a 3D broadcast service according to an embodiment of the present invention.

Referring to FIG. 4, a 3D service Spec-A (4010) indicates 3D video data being transmitted through the base layer, and according to the embodiment of FIG. 3, the 3D video data are provided in a half-resolution top-bottom image format.

A 3D service Spec-B (4020) transmits complementary data for the images of each perspective through the enhancement layer. The receiving system receives the transmitted complementary data. And, the received complementary data are additionally processed to the 3D video data transmitted from the 3D service Spec-A (4010), thereby enabling the receiving system to provide the full-resolution stereoscopic images.

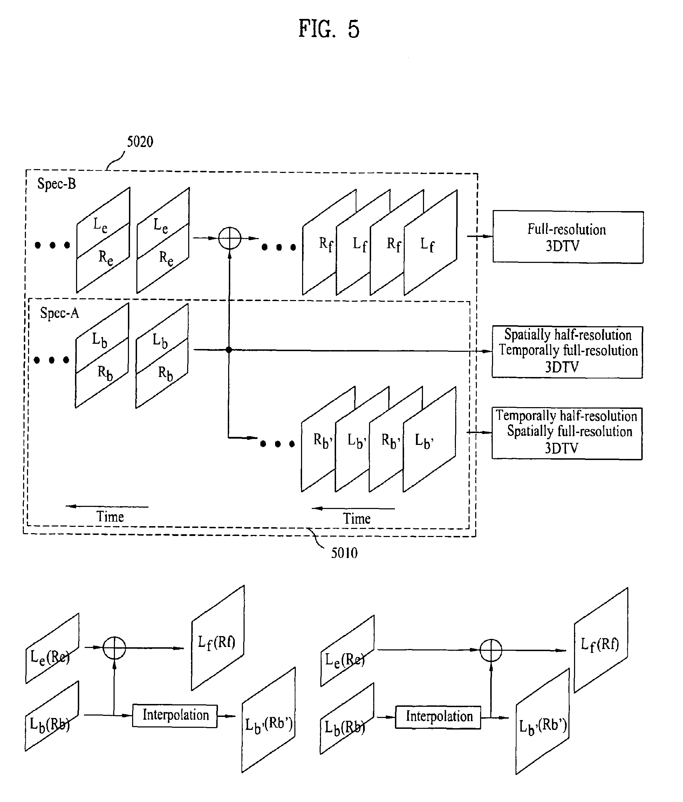

FIG. 5 illustrates a method for providing a 3D broadcast service according to another embodiment of the present invention.

According to an embodiment of the present invention, a 3D service Spec-A (5010) corresponds to the top-bottom image format and may include spatially half-resolution and temporally full-resolution 3D video data. According to another embodiment of the present invention, the video data of the 3D service Spec-A (5010) may be interpolated in the receiving system, so as to be provided in spatially full-resolution and temporally half-resolution. The receiving system of a 3D service Spec-B (5020) may additionally process complementary information so as to provide both spatially and temporally full-resolution images.

In the definition of the temporally half-resolution and spatially full-resolution, the size or the amount of the video data that can be transmitted (or transmittable video data) may be limited due to the limitation of the system resources. The video data may include frame-unit images. Herein, depending upon the size of the transmittable video data, the distance between the frame-unit images that can be temporally positioned may also be limited along with the resolution of the images. For example, due to a limitation in a predetermined bandwidth, if a set of transmittable video data is spatially in half-resolution and temporally in full-resolution, and when spatially full-resolution images are being transmitted within the limitations of the same bandwidth, only the temporally half-resolution (*e.g.,* two times the distance of a frame distance in case of the temporally full-resolution) video data may be transmitted.

A variety of embodiments for the method of processing video data according to the resolution in the receiving system may be available.

The receiving system of the 3D service Spec-A (5010) may perform interpolating on the received image (Lb or Rb), so as to provide an image close to full-resolution (Lb'or Rb') (drawing on the left bottom side of FIG. 5).

The receiving system of the 3D service Spec-B (5020) may use the video data received in the base layer and the video data received in the enhancement layer. The receiving system may interleave and combine the horizontal lines of the received image of the base layer (Lb or Rb) and the received image of the enhancement layer (Le or Re), thereby providing full-resolution images (Lf or Rf). Also, the receiving system may perform low-pass filtering on the received image of the base layer (Lb or Rb) and may perform high-pass filtering on the received image of the enhancement layer (Le or Re), thereby combining the two images and reconstructing the full-resolution image (Lf or Rf). Also, the receiving system may perform interpolating on the received image of the base layer (Lb or Rb) and supplement the interpolated full-resolution (close to full-resolution) image (Lb' or Rb') with a complementary information image (Le or Re), thereby providing the full-resolution image (Lf or Rf) (drawing on the right bottom side of FIG. 5).

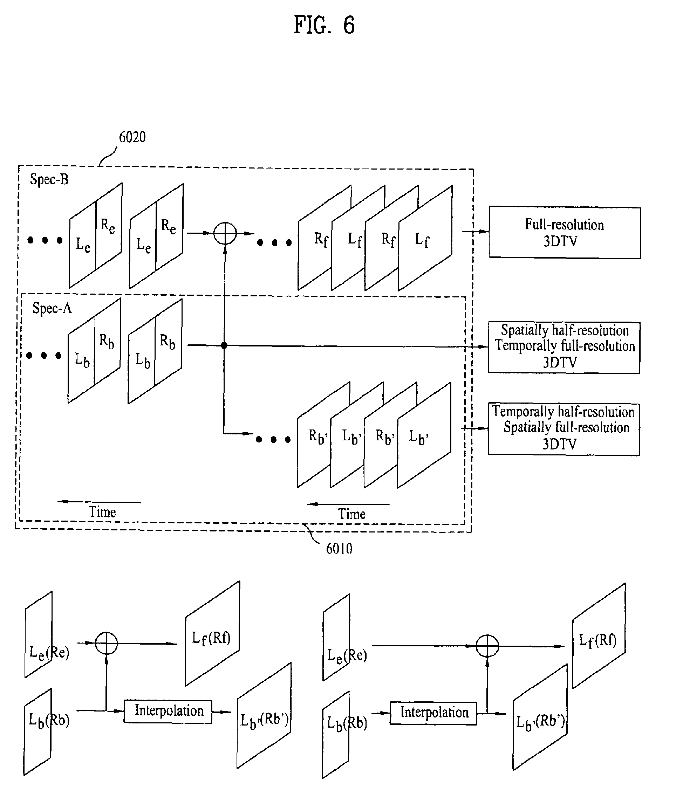

FIG. 6 illustrates a method for providing a 3D broadcast service according to another embodiment of the present invention.

According to an embodiment of the present invention, a 3D service Spec-A (6010) corresponds to the side-by-side image format and may include spatially half-resolution and temporally full-resolution 3D video data. According to another embodiment of the present invention, the video data of the 3D service Spec-A (6010) may be interpolated in the receiving system, so as to be provided in spatially full-resolution and temporally half-resolution. The receiving system of a 3D service Spec-B (6020) may additionally process complementary information so as to provide both spatially and temporally full-resolution images.

In case of FIG. 6, apart from the fact that the image format corresponds to the side-by-side image format, the remaining description of FIG. 6 is identical to that of FIG. 5. Therefore, the overlapping description of the present invention will be omitted for simplicity. However, referring to FIG. 6, in case of interleaving the received image of the base layer (Lb or Rb) and the received image of the enhancement layer (Le or Re), the receiving system of the 3D service Spec-B (6020) may interleave and combine the vertical lines, thereby providing full-resolution images.

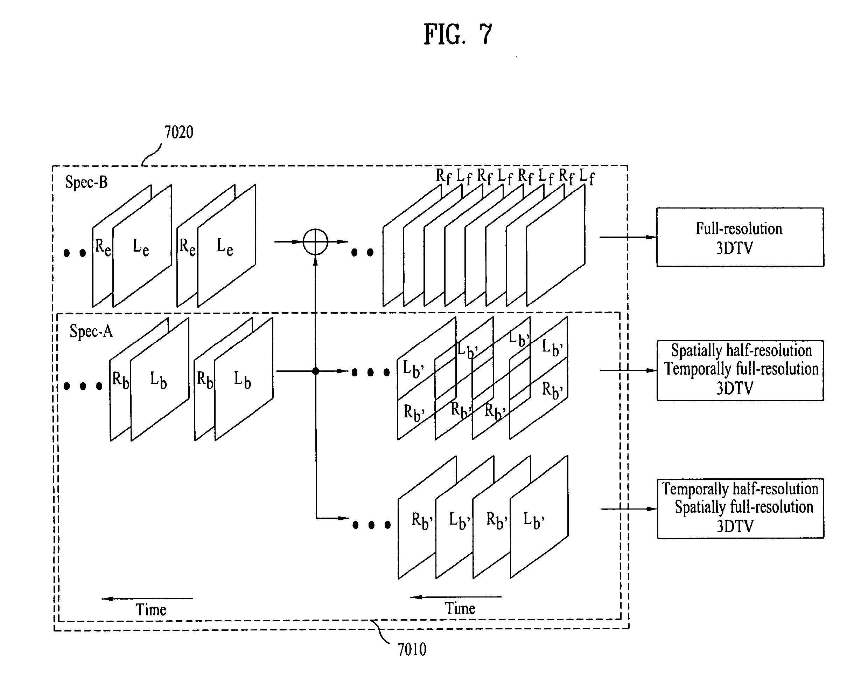

FIG. 7 illustrates a method for providing a 3D broadcast service according to another embodiment of the present invention.

According to an embodiment of the present invention, a 3D service Spec-A (7010) corresponds to the frame sequential image format and may include spatially full-resolution and temporally half-resolution 3D video data. According to another embodiment of the present invention, the video data of the 3D service Spec-A (7010) may be format-converted in the receiving system, so as to be provided in spatially half-resolution and temporally full-resolution. The receiving system of a 3D service Spec-B (7020) may additionally process complementary information so as to provide both spatially and temporally full-resolution images.

According to the embodiment of the present invention, the receiving system of the 3D service Spec-A (7010) may perform decimation on the received image (Lb or Rb), thereby creating (or generating) half-resolution images (Lb' or Rb') of the top-bottom format or the side-by-side format. At this point, while performing decimation, the receiving system acquires a half-resolution images (Lb' or Rb') in the top-bottom format or the side-by-side format. At this point, while performing decimation, the receiving system acquires a pair of half-resolution images that is temporally extended (e.g., doubled) through a frame rate conversion, thereby being capable of providing spatially and temporally full-resolution images.

According to another embodiment, the receiving system of the 3D service Spec-B (7020) respectively inserts images received through the enhancement layer (Le or Le) in-between each consecutive image (Lb or Rb) received through the base layer, thereby being capable of providing spatially and temporally full-resolution images.

As described above, in order to provide a 3D broadcast service of a high resolution, complementary video data should be provided for the 3D broadcast service of the resolution currently being provided, and, accompanying the complementary video data, signaling information for the complementary video data is also required to be transmitted/received and processed.

Hereinafter, a method for signaling complementary video data and information on such complementary video data will be described in detail. According to an embodiment of the present invention, the complementary video data may use an H.264/SVC (Scalable Video Coding) or MVC (Multi-view Video Coding) method as a layered image compression encoding method. And, at this point, the complementary video data may be transmitted through the enhancement layer.

The transmitted signaling information on the complementary video data may be referred to as 3D complementary video information. The 3D complementary video information may be provided in a descriptor or table format according to the embodiment of the present invention, wherein the 3D complementary video information may be referred to as a 3D complementary video descriptor or a 3D complementary video table.

According to the embodiment of the present invention, the 3D complementary video information may be included in the PSIP, which is transmitted from the ATSC broadcasting system, and may particularly be included in the TVCT (or VCT) of the PSIP, thereby being transmitted. Also, the 3D complementary video information may be included in the PSI, which is transmitted from the ATSC broadcasting system, and may particularly be included in the PMT of the PSI. Furthermore, the 3D complementary video information may be included in the complementary video information and may particularly be included in header information of the complementary video ES (Elementary Stream), thereby being transmitted.

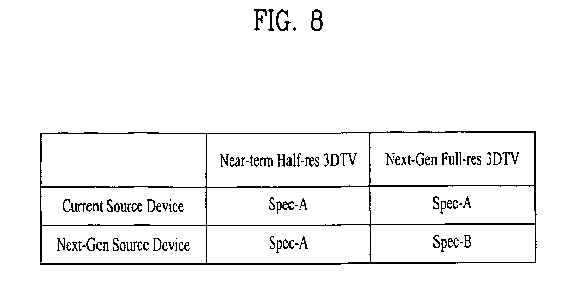

FIG. 8 illustrates the full forward and backward interoperability according to the present invention.

The present invention gives full forward and backward interoperability among current and next generation source devices, and near-term half-resolution 3DTV and next-generation full-resolution 3DTV. There are examples on how they operate. For Spec-A content that plays on Current BD player/STB can have two modes which are consumer viewing half-resolution 3D stereoscopic content on near-term 3DTVs and consumer viewing half-resolution 3D stereoscopic content on next-generation 3DTVs. For Spec-A content that plays on Next-Generation BD player/STB, the consumer can view half-resolution 3D stereoscopic content on near-term 3DTVs and consumer can view half-resolution 3D stereoscopic content on next-generation 3D TVs. For Spec-B content that plays on Current BD player /STB, the consumer can view half-resolution 3D stereoscopic content on near-term 3DTVs and consumer can view half-resolution 3D stereoscopic content on next-generation 3DTVs. Lastly, Spec-B content that plays on Next-Generation BD player/STB, the consumer can view half-resolution 3D stereoscopic content on near-term 3DTVs and consumer can view full-resolution 3D stereoscopic content on next-generation 3DTVs.

Spatial half resolution methods such as Top-Bottom and Side-by-Side in the present invention are well supported in existing BD/DVD authoring systems and facilitates the following feature with either no changes or minor medications such as 3D subtitles using presentation graphic mode, 3D graphics with placement of shifted objects in top & bottom portions of the frame, Application of effects over an entire clip (without need to edit each frame), and BD Live content authoring.

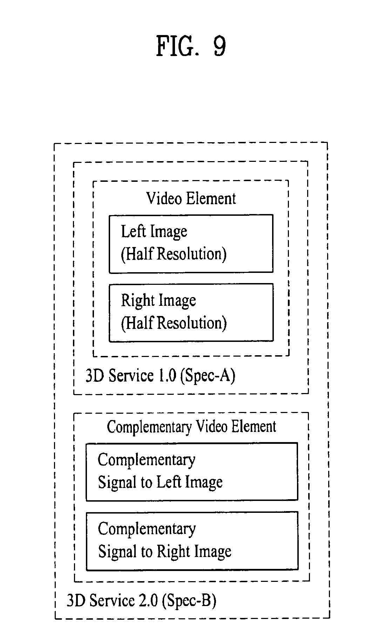

FIG. 9 illustrates a service model that provides compatibility between the first generation 3DTV and second generation 3DTV.

As explained above, if the Left and Right image that configures Stereoscopic 3D video through Spec-A, each half half-resoltuion, and the future stereoscopic 3DTV service can be provided through high-resolution. Here, since conventional video element already supports half-resolution, in order to support full-resolution, differential signal is transmitted through complementary video element. As a result receiver that supports Spec-B will be able to provide full-resolution 3DTV service by adding complementary video element to Spec-A. And the present invention provides method of transmitting complementary video element in order to support 3DTV service for Spec-B.

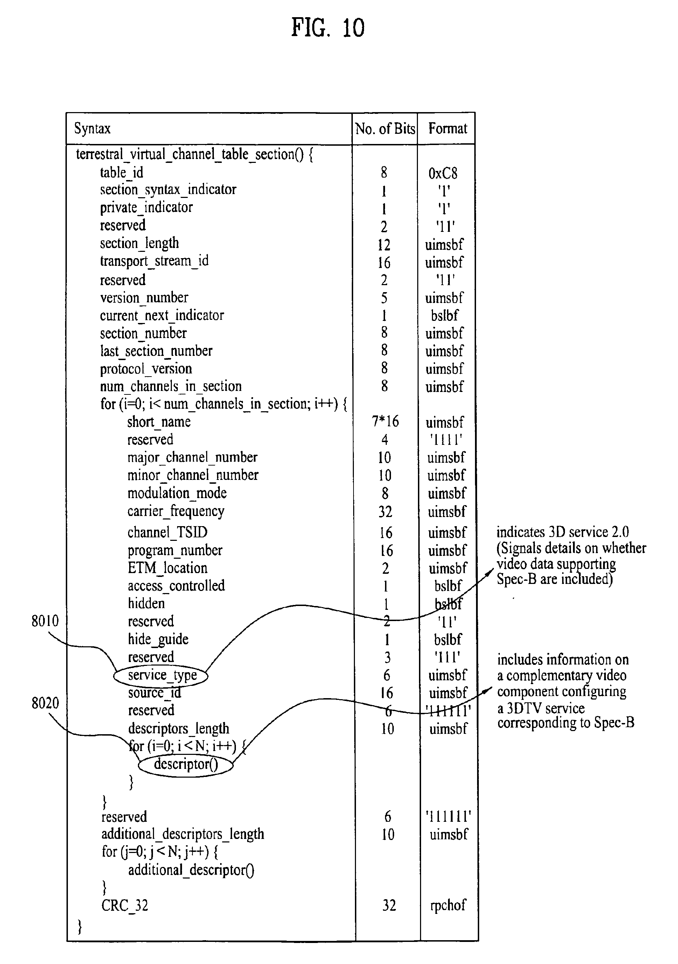

FIG. 10 illustrates a syntax structure of a TVCT including 3D complementary video information according to an embodiment of the present invention.

The fields included in the TVCT of FIG. 10 will be described as follows.

A 'table_id' field is an 8-bit unsigned integer number field that indicates the type of table section.

A 'section_syntax_indicator' field is a one-bit field which shall be set to '1' for the 'terrestrial_virtual_channel_table_section()' field.

A'private_indicator' field is a one-bit field which shall be set to'1'.

A'section_length' field is a 12-bit field in which the first two bits shall be set to '00', and specifies the number of bytes of the section, starting immediately following the'section_length' field, and including the CRC.

A 'transport_stream_id' field indicates the 16-bit MPEG-2 Transport Stream (TS) ID. The 'transport_stream_id' field distinguishes a Terrestrial Virtual Channel Table (TVCT) from others that may be broadcast in different PTCs.

A 'version_number' field serving as a 5-bit field indicates a version number of the Virtual Channel Table (VCT).

A'current_next_indicator' field is a one-bit indicator. In the case where the 'current_next_indicator' field is set to '1', this means that a transmitted Virtual Channel Table (VCT) is currently applicable. When a bit of the 'current_next_indicator' field is set to '0', this means that the transmitted table is not yet applicable and shall be the next table to become valid.

A 'section_number' field is an 8-bit field which gives the number of this section.

A 'last_section_number' field serving as an 8-bit field specifies the number of the last section (that is, the section with the highest section_number value) of the complete Terrestrial Virtual Channel Table (TVCT).

A 'protocot_version' field serving as an 8-bit unsigned integer field is used to allow, in the future, the table type to carry parameters that may be structured differently than those defined in the current protocol.

A 'num_channels_in_section' field serving as an 8-bit field specifies the number of virtual channels in this VCT section.

A 'short_name' field may indicate the name of the virtual channel, represented as a sequence of one to seven 16-bit code values interpreted in accordance with the UTF-16 standard for unicode character data.

A 'major_channel_number' field indicates a 10-bit number that represents the 'major' channel number associated with the virtual channel being defined in this iteration of the 'for' loop.

A 'minor_channel_number' field indicates a 10-bit number in the range from '0' to '999' so as to represent the 'minor' or 'sub' channel number. This 'minor_channel_number' field together with the 'major_channel_number' field may indicate a two-part channel number, where the minor_channel_number represents the second or right-hand part of the number.

A 'modulation_mode' field including an 8-bit unsigned integer may indicate a modulation mode for the transmitted carrier associated with the virtual channel.

A 'carrier_frequency' field may indicate an allowed carrier frequency.

A 'channel_TSID' field is a 16-bit unsigned integer field in the range from 0x0000 to 0xFFFF. The 'channel_TSID' field represents an MPEG-2 Transport Stream (TS) ID associated with the Transport Stream (TS) carrying the MPEG-2 program referenced by the virtual channel.

A 'program_number' field includes a 16-bit unsigned integer that associates the virtual channel being defined here with the MPEG-2 program association and TS program map tables.

An 'ETM_location' field serving as a 2-bit field specifies the existence and the location of an Extended Text Message (ETM). An 'access_controlled' field indicates a 1-bit Boolean flag. When the Boolean flag of the 'access_controlled' field is set, this means that accessing the events associated with a virtual channel may be controlled.

A'hidden' field indicates a 1-bit Boolean flag. When the Boolean flag of the 'hidden' field is set, this means that the virtual channel is not accessed by a user by a direct entry of the virtual channel number.

A'hide_guide' field indicates a Boolean flag. When the Boolean flag of the hide_guide' field is set to zero '0' for a hidden channel, this means that the virtual channel and virtual channel events may appear in EPG displays.

A 'service_type' field is a 6-bit enumerated type field that shall identify the type of service carried in the virtual channel.

A'source_id field' includes a 16-bit unsigned integer that identifies the programming source associated with the virtual channel.

A 'descriptors_length' field may indicate a total length (in bytes) of descriptors for a virtual channel.

A'descriptor()' field may include zero or more descriptors determined to be appropriate for the 'descriptor()' field.

An 'additional_descriptors_length' field may indicate a total length (in bytes) of a VCT descriptor list.

A 'CRC_32' field is a 32-bit field which contains a CRC value that ensures a zero output of registers in the decoder defined in Annex A of ISO/IEC 13818 1 "MPEG-2 Systems" [8] after processing the entire Terrestrial Virtual Channel Table (TVCT) section.

When a broadcast service being provided from a corresponding channel is the 3D service 2.0, a service_type field (8010) corresponds to a field indicating this information. For example, when a field value of the service_type field (8010) is 0x13, this indicates that a 3D broadcast program (audio, video, and complementary video data for displaying 3D stereoscopic images) is being provided from a corresponding virtual channel. A descriptor field (8020) includes the 3D complementary video information and will hereinafter be described in detail with reference to the accompanying drawings.

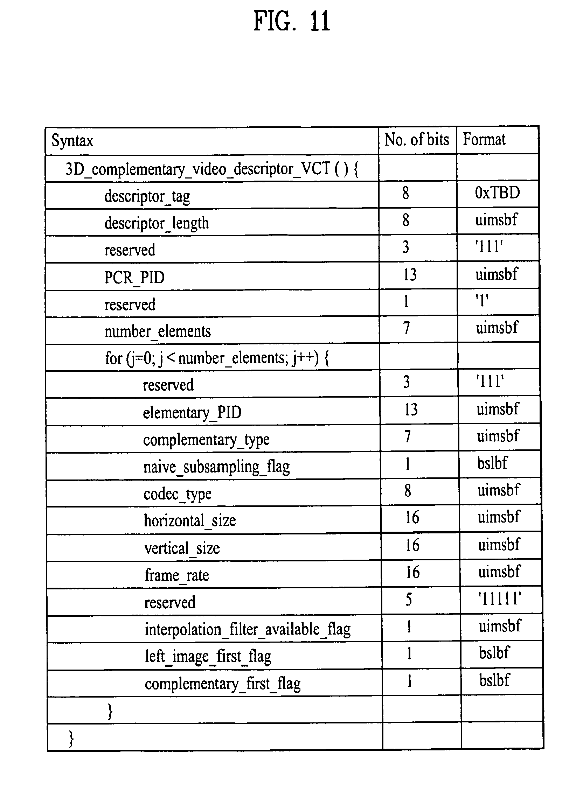

FIG. 11 illustrates a syntax structure of a 3D complementary video descriptor included in a TVCT according to an embodiment of the present invention.

The fields included in the 3D complementary video descriptor of FIG. 11 will now be described as follows.

A number_elements field indicates a number of video elements configuring a respective virtual channel. The broadcast receiver may receive a 3DTV service location descriptor, so as to parse information included in fields below the numbers_elements field as number of times, the number corresponding to a number of video elements configuring the respective virtual channel.

A complementary_type field indicates a method of configuring complementary video data or complementary video streams. When full-resolution images are being outputted, the receiving system uses the information of this field to reconfigure (or reconstruct) the base video data and the complementary video data into a full-resolution image.

A naive_subsampling_flag field indicates whether subsampling is being performed or whether low-pass filtering and high-pass filtering are being performed, when a base video component and a complementary video component are being configured. For example, when the field value of the naive_subsampling_flag field is equal to 1, this indicates that subsampling is being performed. And, when the field value is equal to 0, this indicates that low-pass filtering and high-pass filtering are being performed.

A codec_type field indicates a type of video codec used for encoding or compressing a complementary video component. For example, depending upon the field value of the codec_type field, a coding scheme such as MPEG-2, AVC/H.264, SVC Extension, and so on, may be indicated.

A horizontal_size field, a vertical_size field, and a frame_rate size field respectively indicate a horizontal size, a vertical size, and a frame rate of the complementary video component. Herein, the horizontal size and the vertical size may indicate spatial resolution, and the frame rate may indicate temporal resolution. For example, when the field value of the complementary_type field is equal to 0x0004, the spatial/temporal resolutions of the complementary video component may both become a full-resolution.

An interpolation_filter_available_flag field indicates whether or not a extra customized filter is being used, when interpolation is performed with respect to the base video component. At this point, according to an embodiment of the present invention, information such as a filter coefficient for implementing a filter may be included in a descriptor loop for the complementary video component in the TVCT or PMT and may be provided in a descriptor format. And, according to another embodiment of the present invention, such information may be included in header information or message information within a video element, thereby being provided. Among the video data for a left view and the video data for a right view configuring the complementary video information, a left_image_first_flag field indicates which of the two video data occur (or are generated) first. According to an embodiment of the present invention, when the video data corresponding to the left view is received first, the field value of the left_image_first_flag field may be set to 1.

A complementary_first_flag field indicates an order of combining the base video component and the complementary video component during the procedure of configuring a full-resolution image. According to an embodiment of the present invention, when the video data corresponding to the base video component precedes the video data corresponding to the complementary video component, the field value of the complementary_first_flag field may be set to 1.

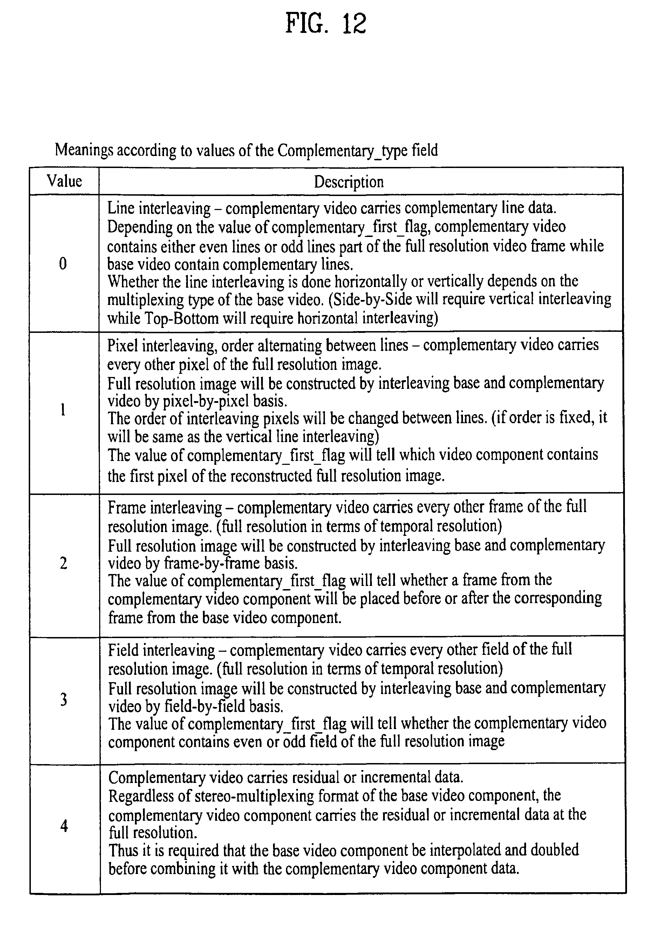

FIG. 12 illustrates an image configuration method according to a field value of a complementary_type field included in 3D complementary video information according to an embodiment of the present invention.

The complementary_type field included in FIG. 11 indicates a method of configuring complementary video data or complementary video streams. And, the receiving system uses the information of this field to reconfigure (or reconstruct) the base video data and the complementary video data into a full-resolution image. Herein, according to an embodiment of the present invention, the reconfiguration (or reconstruction) of the full-resolution image according to the field value of the complementary_type field may be diversely performed as shown in FIG. 12.

1) when the field value of the complementary_type field is equal to 0: The complementary_type field indicates that complementary video data are lineinterleaved and carry video data for the complementary line.

The complementary video data may include video data for even lines or odd lines, which are added to the base video data in order to configure a full-resolution image. The video data for even lines or odd lines may be horizontally or vertically line-interleaved according to the multiplexing format of the base video data, so as to be generated (or created). According to an embodiment of the present invention, when the base video data correspond to the side-by-side format, the vertical line-interleaving may be performed, and when the based video data correspond to the top-bottom format, the horizontal line-interleaving may be performed.

2) when the field value of the complementary_type field is equal to 1: The complementary_type field indicates that the complementary video data are pixelinterleaved and carry order information on the perspective of the image being alternated (or changed) for each line. Herein, the order information corresponds to information on the pixels for reconfiguring a full-resolution image.

The complementary video data may be interleaved in pixel units, so as to be transmitted in a checkerboard format. In this case, a pixel of a left image and a pixel of a right image may be alternated in pixel units (or on a pixel-by-pixel basis) within a single line. Also, in order to normally recover the full-resolution image, the receiving system is required to transmit such information on the order of alternation. In this case, regarding the video data included in the first pixel of the full-resolution image, which is being reconfigured (or reconstructed), the complementary_first_flag field indicates to which perspective or layer the video data included in the first pixel corresponds.

3) when the field value of the complementary_type field is equal to 2: The complementary_type field indicates that the complementary video data are frame-interleaved and include complementary frames for reconfiguring (or reconstructing) a full-resolution image.

According to the embodiment of the present invention, the meaning of full-resolution signifies temporal resolution. In this case, the complementary video data may include image data interleaved in frame units (or on a frame-by-frame basis) and may also include video data on a frame-by-frame (or frame sequential) basis. The complementary_first_flag field may notify the receiving system whether the video frame being received through the complementary video component is positioned before or after the video frame being received through the base video component.

4) when the field value of the complementary_type field is equal to 3: The complementary_type field indicates that the complementary video data are fieldinterleaved and include complementary frames for reconfiguring (or reconstructing) a full-resolution image.

According to the embodiment of the present invention, the meaning of full-resolution signifies temporal resolution. In this case, the complementary video data may include image data interleaved in field units (or on a field-by-field basis) and may also include video data on a field-by-field basis. The complementary_first_flag field may notify the receiving system whether the video field being received through the complementary video component corresponds to an even field or an odd field for the full-resolution image.

5) when the field value of the complementary_type field is equal to 4: The complementary_type field may indicate that the complementary video data include residual or incremental data for reconfiguring (or reconstructing) the full-resolution image.

According to the embodiment of the present invention, regardless of the stereo-multiplexing format of the base video component, the complementary video component includes residual or incremental data for reconfiguring (or reconstructing) the full-resolution image. In this case, prior to combining the complementary video data and the base video data, the receiving system may perform interpolation or doubling on the base video data.

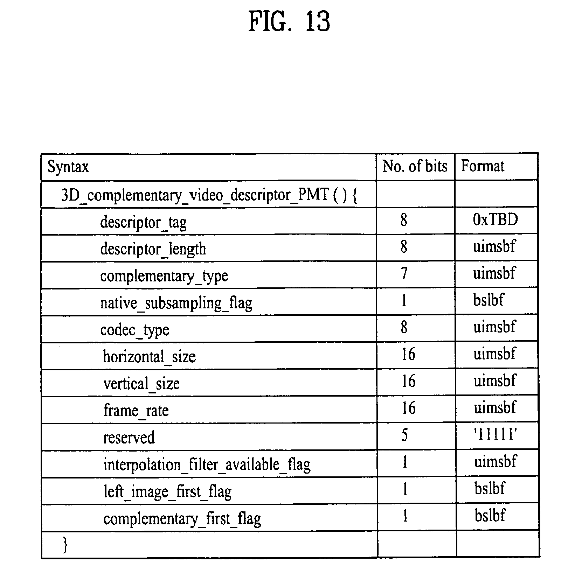

FIG. 13 illustrates an embodiment of signaling of 3D Complementary Video Descriptor in PMT. In other words, 3D complementary video descriptor within PMT will provide complementary video element that configures full-resolution 3D stereoscopic program.

3D_complementary_video_descriptor_PMT is located after the ES_info_length field within the PMT and includes information corresponding to elementary stream. The meaning of each field is identical with 3D_complementary_video_descriptor_VCT. The codec_type can be replaced with stream_type field within PMT and in such a case 3D complementary video descriptor may be omitted.

Subsequently, a method for signaling 3D complementary video information using the PMT will now be described in detail.

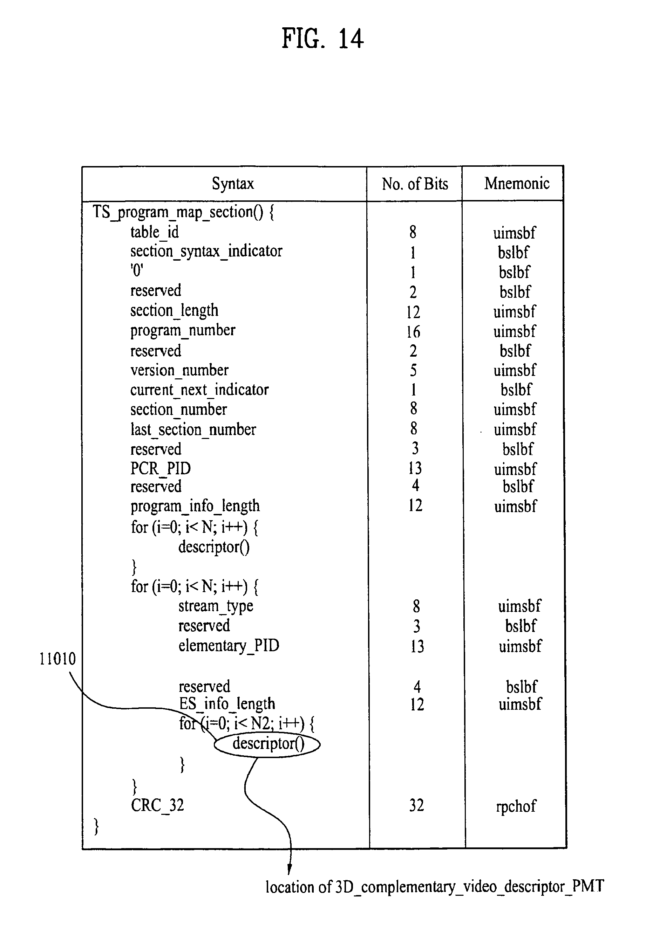

FIG. 14 illustrates a syntax structure of a PMT including 3D complementary video information according to an embodiment of the present invention.

The fields included in the PMT of FIG. 14 will be described as follows. A 'table_id' field is an 8-bit field which shall always be set to '0x02' in a 'TS_program_map_section' field.

A 'section_syntax_indicator' field is a 1-bit field which shall be set to '1'.

A 'section_length' field is a 12-bit field in which first two bits shall be set to '00', and specifies the number of bytes of the section starting immediately the 'section_length' field, and including the CRC.

A 'program_number' field is a 16-bit field, which specifies the program to which the 'program_map_PID' field is applicable.

A 'version_number' field is a 5-bit field, which indicates the version number of the 'TS_program_map_section' field.

A'current_next_indicator' field is a 1-bit field. When a bit of the 'current_next_indicator' field is set to '1', this means that the transmitted 'TS_program_map_section' field is currently applicable. When a bit of the 'current_next_indicator' field is set to '0', this means that the transmitted 'TS_program_map_section' field is not yet applicable and shall be the next 'TS_program_map_section' field to become valid.

A 'section_number' field includes a value of an 8-bit field which shall be '0x00'.

A 'last_section_number' field includes a value of an 8-bit field which shall be'0x00'.

A 'PCR_PID' field is a 13-bit field indicating the PID of the Transport Stream (TS) packets which shall contain the PCR fields valid for the program specified by a 'program_number' field. In the case where no PCR is associated with a program definition for private streams, then this field shall take the value of '0x1FFF'.

A 'program_info_length' field is a 12-bit field, the first two bits of which shall be '00'. The 'program_info_length' field specifies the number of bytes of descriptors immediately following the 'program_info_length' field.

A'stream_type' field is an 8-bit field specifying the type of elementary stream or payload carried within packets with the PID whose value is specified by the 'elementary_PID' field. In addition, the 'stream_type' field may indicate a coding type of a corresponding video element. As an exemplary coding type, a JPEG, an MPEG-2, an MPEG-4, an H.264/AVC, an H.264/SVC or H.264/MVC scheme may be used.

An 'elementary_PID' field is a 13-bit field specifying a PID of the Transport Stream (TS) packets which carry the associated elementary stream or payload. This PID may be used as a PID of primary video data or secondary video data.

An 'ES_info_length' field is a 12-bit field, the first two bits of which shall be '00'. The 'ES_info_length' field may specify the number of bytes of descriptors of the associated elementary stream immediately following the 'ES_info_length' field.

A 'CRC_32' field is a 32-bit field which contains a CRC value that gives a zero output of registers in the decoder defined in Annex B after processing the entire Transport Stream program map section.

A descriptor field (11010) includes 3D complementary video information and will hereinafter be described in detail with reference to the accompanying drawings.

Subsequently, a method for signaling 3D complementary video information through a complementary video ES included in the complementary video data will now be described in detail.

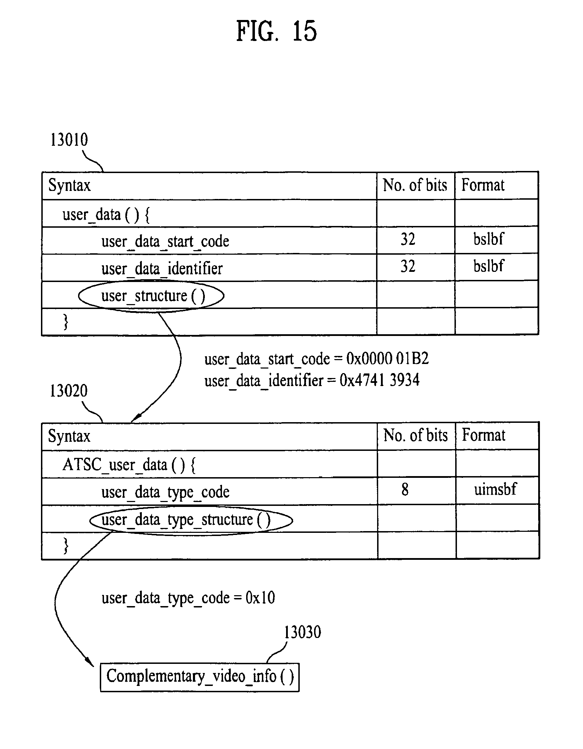

FIG. 15 illustrates a syntax structure of a Picture Extension and user Data of a video ES including 3D complementary video information according to an embodiment of the present invention.

According to an embodiment of the present invention, an ATSC telecommunications system may include 3D complementary video information in the header information of a video ES, instead of a PISP layer, and may signal the corresponding information. More specifically, 3D complementary video information (complementary_video_info(); 13030) may be included in the complementary video ES so as to be transmitted, and, by parsing the corresponding information in the video decoder, the receiving system may acquire information required for controlling display output.

According to an embodiment of the present invention, when the complementary video data are encoded by using an MPEG-2 video coding scheme, the 3D complementary video information may be included in a user_data() (13010) of a Picture Extension and user Data, so as to be transmitted. The Picture Extension and user Data may be received after a Picture Header and a Picture Coding Extension, thereby being decoded.

In the embodiment of FIG. 15, a field value of a user_data_start_code field is fixed to 0x0000 01B2.

A field value of a user_data_identifier (or ATSC_identifier) field corresponds to a 32-bit code given a value of 0x4741 3934.

A user_data_type_code field indicates a data type of an ATSC user data (13020) and may have a field value of 8 bits. According to an embodiment of the present invention, by using a value of 0x10, this field may indicate that the 3D complementary video information (13030) is included.

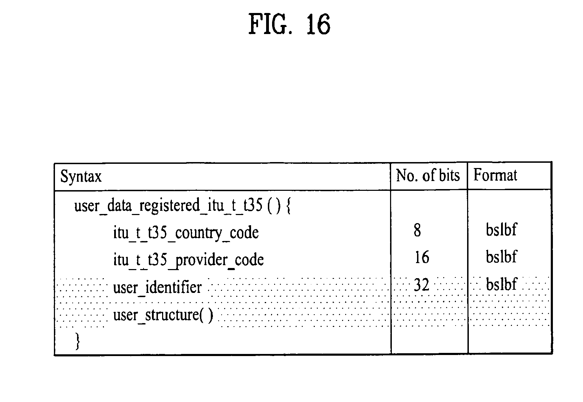

In case of H.264 or AVC Video, the corresponding information is transmitted to SEI (Supplemental Enhancement Information) area as illustrated in FIG. 16. The user_identifier and user_structure is included in user_data_registered_itu_t_135(). Therefore, the corresponding information is transported to SEI payloads instead of user_data().

Hereinafter, the method for providing a full-resolution image using base video data, complementary video data, and 3D complementary video data received from a 3D video service Spec-B will now be described in detail.

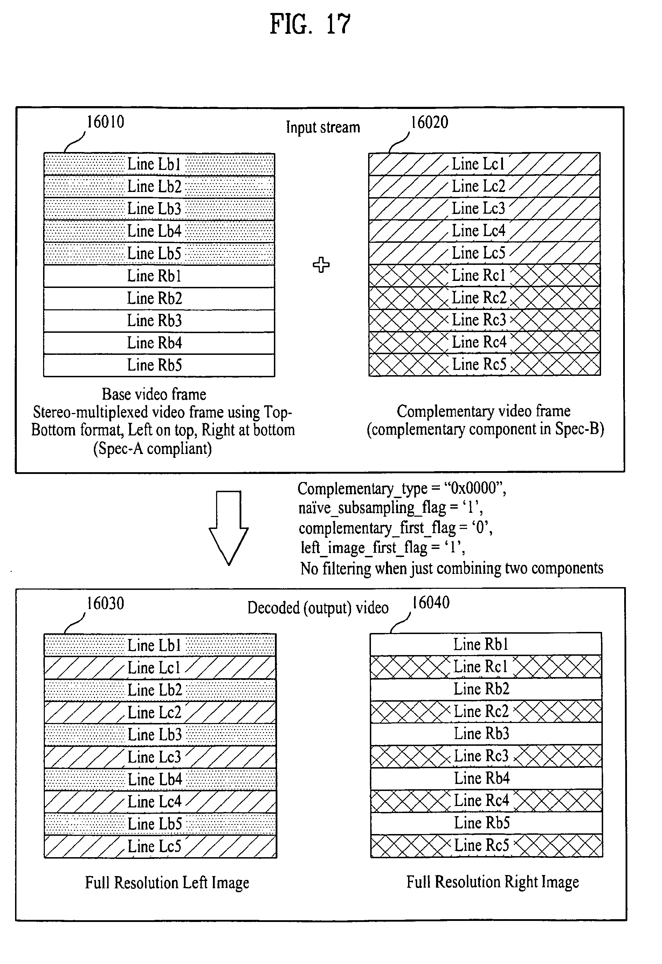

FIG. 17 illustrates a method for providing a full-resolution image using base video data, complementary video data, and 3D complementary video information received from a 3D video service Spec-B according to an embodiment of the present invention.

In the embodiment of FIG. 17, the image of the base video data is received in the top-bottom format, wherein the left image is positioned at the top side, and wherein the right image is positioned at the bottom side. In case of the 3D complementary video information, the field value of the complementary_type field is indicated as '0x0000', the field value of the naive_subsampling_flag field is indicated as '1', the field value of the left_image_first_flag field is indicated as '1', and the field value of the complementary_first_flag field is indicated as '0'. More specifically, the 3D complementary video information indicates that the complementary video data are processed with line-interleaving, that low-pass filtering and high-pass filtering are not performed when performing subsampling, that the video data corresponding to the left view is presented first, and that the video data corresponding to the base video precede the video data corresponding to the complementary video.

Depending upon the 3D complementary video information, the receiving system extracts left image portions (Lb1∼Lb5) from a base video frame (16010) of the top-bottom format, extracts left image portions (Lc1∼Lc5) from a complementary video frame (16020), and reconfigures (or reconstructs) the extracted video data line-by-line, thereby acquiring a full-resolution left image (16030). Similarly, depending upon the 3D complementary video information, the receiving system extracts right image portions (Rb1∼Rb5) from a base video frame (16010) of the top-bottom format, extracts right image portions (Rc1∼Rc5) from a complementary video frame (16020), and reconfigures (or reconstructs) the extracted video data line-by-line, thereby acquiring a full-resolution right image (16040).

The receiving system may display the acquired full-resolution left image (16030) and right image (16040) through a frame sequential scheme. In this case, since two frames (16030, 16040) are generated from one frame (16010) in frame units, temporal full-resolution display becomes available.

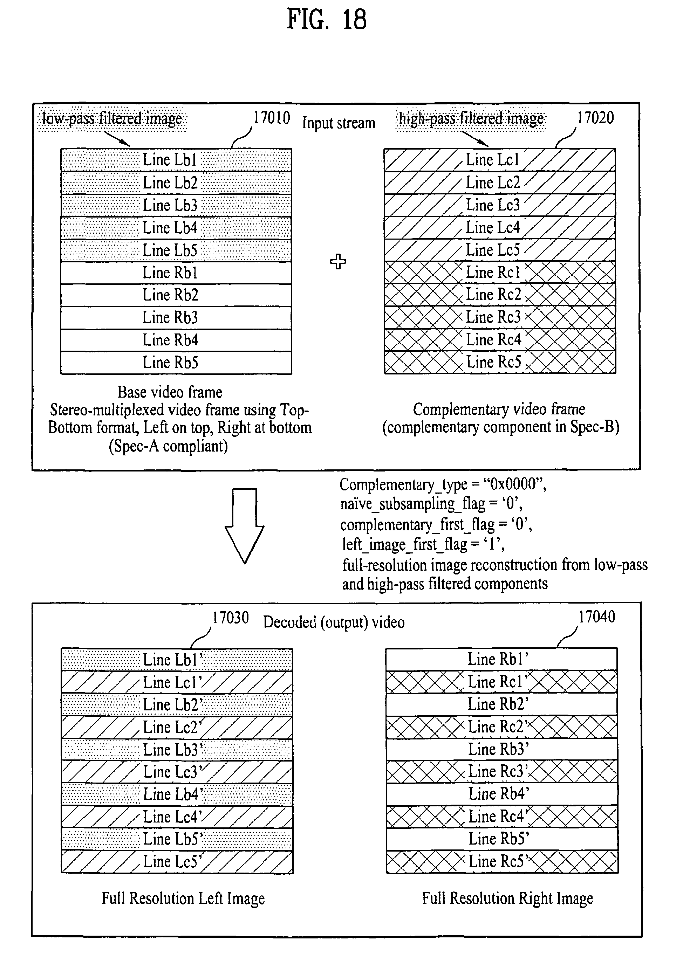

FIG. 18 illustrates a method for providing a full-resolution image using base video data, complementary video data, and 3D complementary video information received from a 3D video service Spec-B according to another embodiment of the present invention.

In the embodiment of FIG. 18, the image of the base video data is received in the top-bottom format, wherein the left image is positioned at the top side, and wherein the right image is positioned at the bottom side. In case of the 3D complementary video information, the field value of the complementary_type field is indicated as '0x0000', the field value of the naive_subsampling_flag field is indicated as '0', the field value of the left_image_first_flag field is indicated as '1', and the field value of the complementary_first_flag field is indicated as '0'. More specifically, the 3D complementary video information indicates that the complementary video data are processed with line-interleaving, that low-pass filtering and high-pass filtering must be performed when performing subsampling, that the video data corresponding to the left view is presented first, and that the video data corresponding to the base video precede the video data corresponding to the complementary video.

Firstly, depending upon the 3D complementary video information, the receiving system performs low-pass filtering on the base video frame, thereby acquiring filtered base video frames (Lb1'∼Lb5' and Rb1'∼Rb5'). Also, the receiving system performs high-pass filtering on the complementary video frame, thereby acquiring filtered complementary video frames (Lc1'∼Lc5' and Rc1'∼Rc5').

Depending upon the 3D complementary video information, the receiving system extracts low-pass filtered left image portions (Lb1'∼Lb5') from a base video frame of the top-bottom format and extracts low-pass filtered left image portions (Lc1'∼Lc5') from a complementary video frame. Thereafter, the receiving system reconfigures (or reconstructs) the extracted video data line-by-line, thereby acquiring a full-resolution left image (1030). Similarly, depending upon the 3D complementary video information, the receiving system extracts low-pass filtered right image portions (Rb1'∼Rb5') from a base video frame of the top-bottom format and extracts low-pass filtered right image portions (Rc1'∼Rc5') from a complementary video frame. Then, the receiving system reconfigures (or reconstructs) the extracted video data line-by-line, thereby acquiring a full-resolution right image (17040).

The receiving system may display the acquired full-resolution left image (17030) and right image (17040) through a frame sequential scheme. In this case, since two frames (17030, 17040) are generated from one frame (17010) in frame units, temporal full-resolution display becomes available.

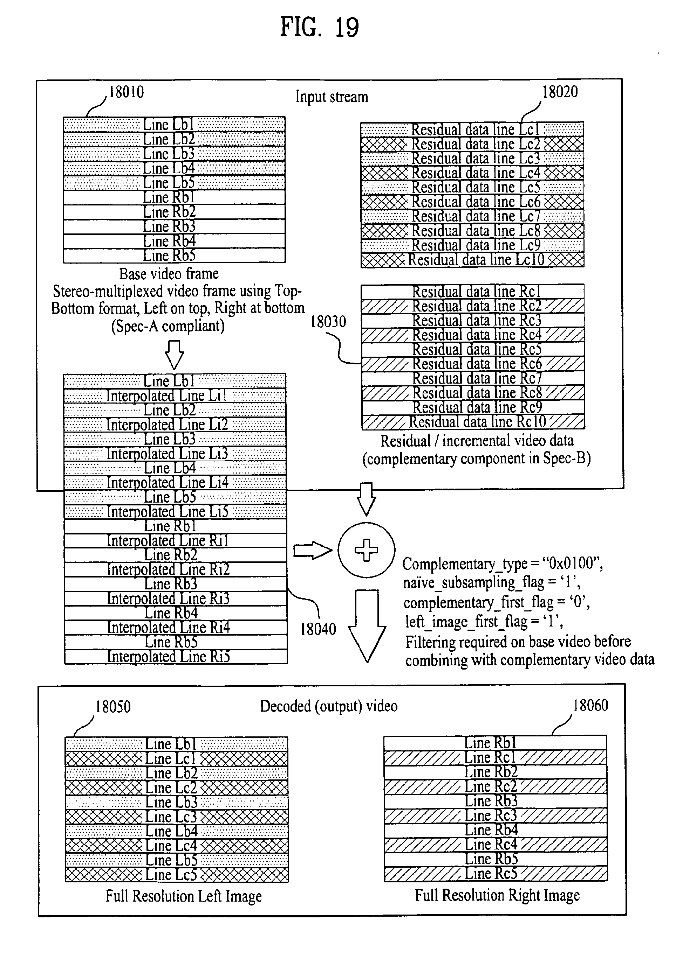

FIG. 19 illustrates a method for providing a full-resolution image using base video data, complementary video data, and 3D complementary video information received from a 3D video service Spec-B according to yet another embodiment of the present invention.

In the embodiment of FIG. 19, the image of the base video data is received in the top-bottom format, wherein the left image is positioned at the top side, and wherein the right image is positioned at the bottom side. In case of the 3D complementary video information, the field value of the complementary_type field is indicated as '0x0004', the field value of the naive_subsampling_flag field is indicated as '1', the field value of the left_image_first_flag field is indicated as '1', and the field value of the complementary_first_flag field is indicated as '0'. More specifically, the 3D complementary video information indicates that the complementary video data include residual video data with respect to the base video data (0x0004), that low-pass filtering and high-pass filtering are not performed when performing subsampling, that the video data corresponding to the left view is presented first, and that the video data corresponding to the base video precede the video data corresponding to the complementary video.

The receiving system performs line-by-line interpolation on the base video frame (18010), which is received first, thereby acquiring a spatially doubled video frame (18040). Thereafter, the receiving system combines the interpolated lines (Li1, Li2, ..., Ri5) with the residual data lines (Lc1∼Lc10 and Rc1∼Rc10) of the complementary video frame (18020). Then, by positioning the combined lines line-by-line with the lines of the base video frame, a full-resolution left image (18050) and right image (18060) are acquired. According to an embodiment of the present invention, in case of the left image, line Li1 of the interpolated base video frame (18040) is combined with data of lines Lc1 and Lc2 of the complementary video frame (18020), thereby acquiring a line image Lc1 of the full-resolution image (18050). Subsequently, by using a method of positioning this line image Lc1 between line images Lb1 and Lb2, a full-resolution left image (18050) may be acquired.

The receiving system may display the acquired full-resolution left image (18050) and right image (18060) through a frame sequential scheme. In this case, since two frames (17050, 17060) are generated from one frame (18010) in frame units, temporal full-resolution display becomes available.

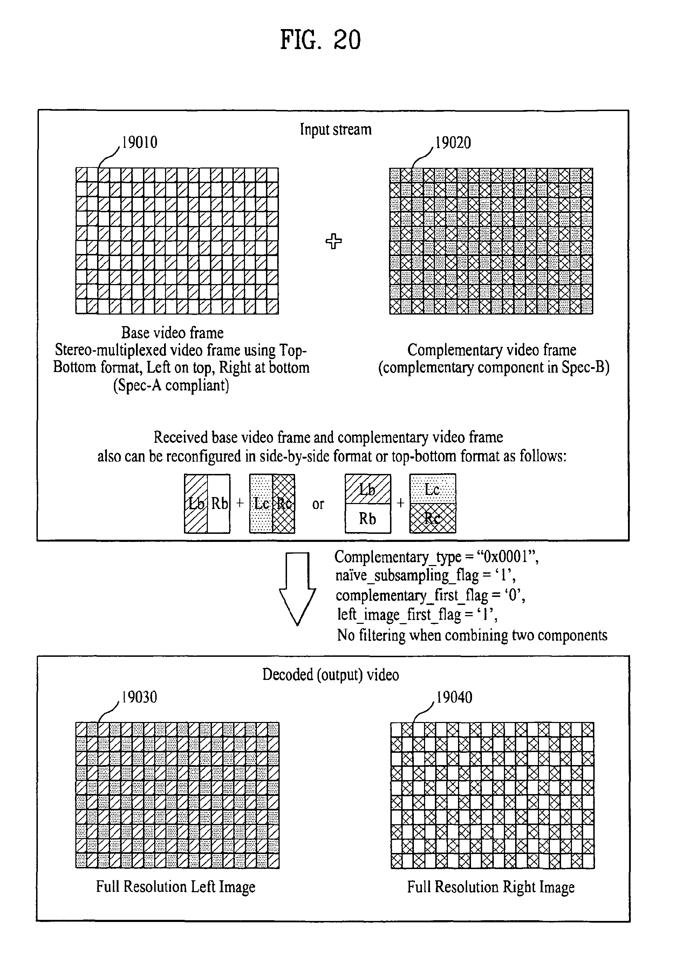

FIG. 20 illustrates a method for providing a full-resolution image using base video data, complementary video data, and 3D complementary video information received from a 3D video service Spec-B according to yet another embodiment of the present invention. In the embodiment of FIG. 20, the image of the base video data is received in the checkerboard format, wherein the left image is positioned in an uppermost pixel of a left-end portion. In case of the 3D complementary video information, the field value of the complementary_type field is indicated as '0x0001', the field value of the naive_subsampling_flag field is indicated as '1', the field value of the left_image_first_flag field is indicated as '1', and the field value of the complementary_first_flag field is indicated as '0'. More specifically, the 3D complementary video information indicates that the complementary video data include a line-alternating order of the complementary video image for the base video image (0x0001), that low-pass filtering and high-pass filtering are not performed when performing subsampling, that the video data corresponding to the left view is presented first, and that the video data corresponding to the base video precede the video data corresponding to the complementary video.

The receiving system aligns pixels of a left view and pixels of a right view included in the received base video frame (19010) and aligns pixels of a left view and pixels of a right view included in the received complementary video frame (19020) for each line according to the respective order by using the 3D complementary video information. Thus, full-resolution left image (19030) and right image (19040) may be acquired. Also, according to an embodiment of the present invention, the receiving system re-configures (or reconstructs) the received base video frame (19010) and complementary video frame (19020) in the side-by-side format or the top-bottom format. Then, the receiving system aligns the reconfigured video frames in accordance with the 3D complementary video information, thereby acquiring the full-resolution left image (19030) and right image (19040).

The receiving system may display the acquired full-resolution left image (19030) and right image (19040) through a frame sequential scheme. In this case, since two frames (19030, 19040) are generated from one frame (19010) in frame units, temporal full-resolution display becomes available.

The operation of the receiving system acquiring a full-resolution video component by combining a base video component and a complementary video component may be performed according to diverse embodiments in accordance with the above-described embodiments of the present invention.

According to an embodiment of the present invention, when the base video component is referred to as B, when the complementary video component is referred to as C, and when a full-resolution video component is referred to as F, the following operation scenario may be available.

case 1: F = B + C

case 2: F = B' + C

case 3: F = B' + C'

Herein, B' and C' respectively correspond to B and C being processed with interpolation/filtering.

Case 1 corresponds to an example wherein the field value of the naive_subsampling_flag field is equal to '1'. Therefore, this case corresponds to an embodiment wherein two subsampled video component are interleaved and aligned.

Case 2 corresponds to an example wherein B is processed with interpolation/filtering and then combined with C, thereby gaining F. Herein, C may correspond to a residual/incremental data format. (Particularly, when an SVC coding scheme is used, such form of combination may be performed.)

Case 3 corresponds to an example wherein the field value of the naive_subsampling_flag field is equal to '0'. Therefore, this case corresponds to an embodiment wherein both B and C are processed with interpolation/filtering and wherein B' is combined with C', thereby gaining F.

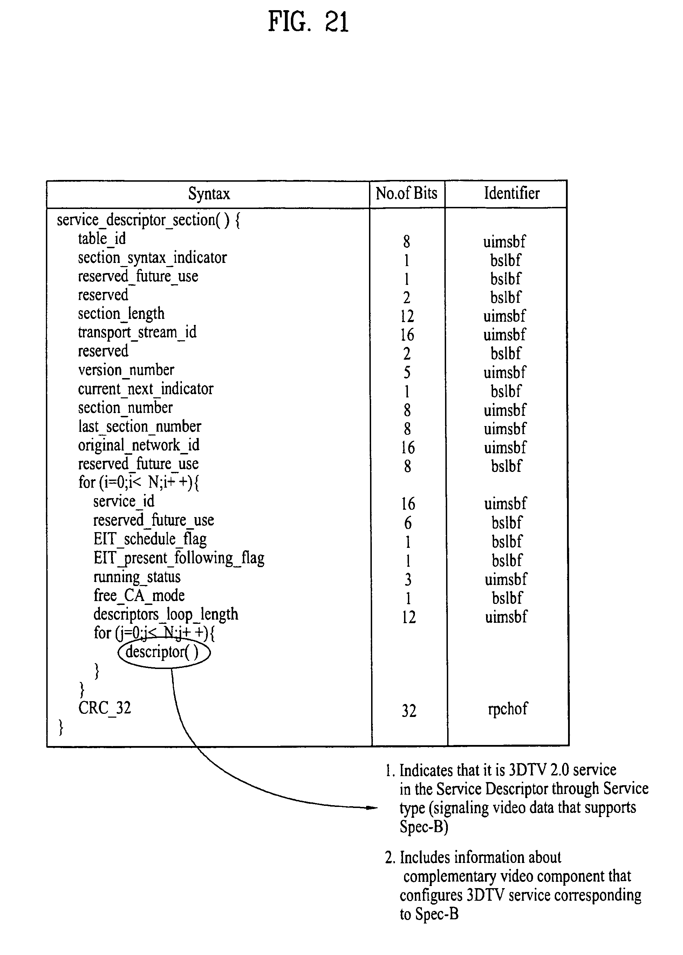

FIG. 21 is another embodiment illustrating signaling 3DTV service using SDT.

The Service Descriptor includes Service type that indicates that it is a 3DTV 2.0 service (signaling whether video data is included for Spec-B support). Also, the descriptor() includes information about complementary video component configuring 3DTV service corresponding to Spec-B.

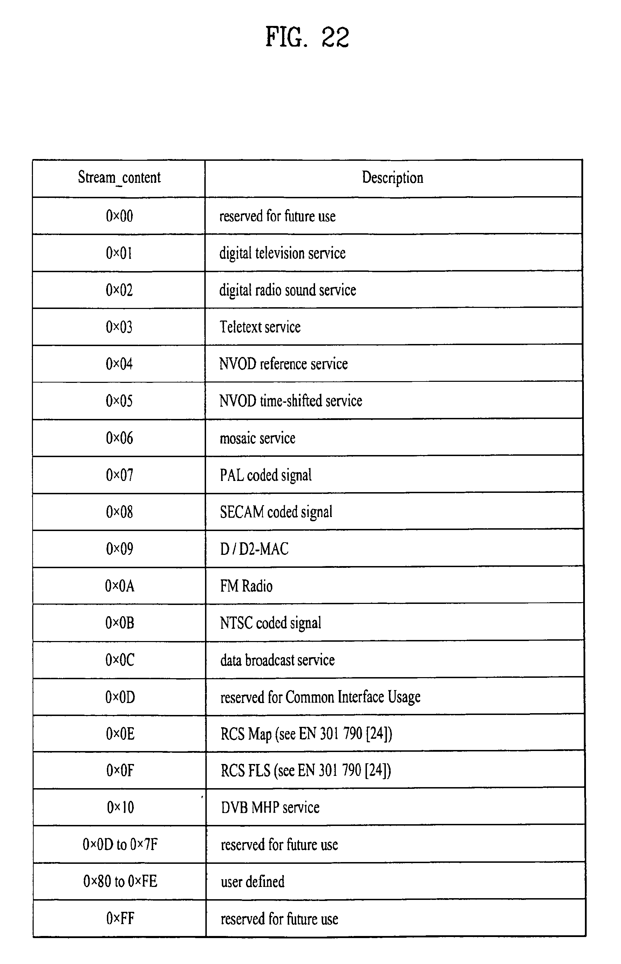

FIG. 22 illustrates service type of full-resolution stereoscopic 3DTV service in order to support Spec-B according to an embodiment of the present invention. The value of the service type may be included in the Descriptor Loop of SDT included in Service Descriptor of DVB. The improvement according to the present invention as compared to the conventional Spec-A is as follows:

1) Spec-A and Spec-B services are separately defined but the streams configuring each service are shared. In case of Spec-B, the service type is defined as explained in FIG. 22. The Base Layer stream that configures the service may be shared and moreover, the Spec-B service further includes Enhancement layer stream to provide Full Resolution 3DTV service.

2) It is also possible to provide the full-resolution service with just configuring Spec-A. In such a case Enhancement Stream does not have a separate value so the conventional Spec-A receiver will ignore the Enhancement Stream and provide half-resolution with just the base Layer stream. In a Spec-B supported receiver, the Enhancement Stream is recognized and the receiver will combine with base layer to provide full-resolution service.

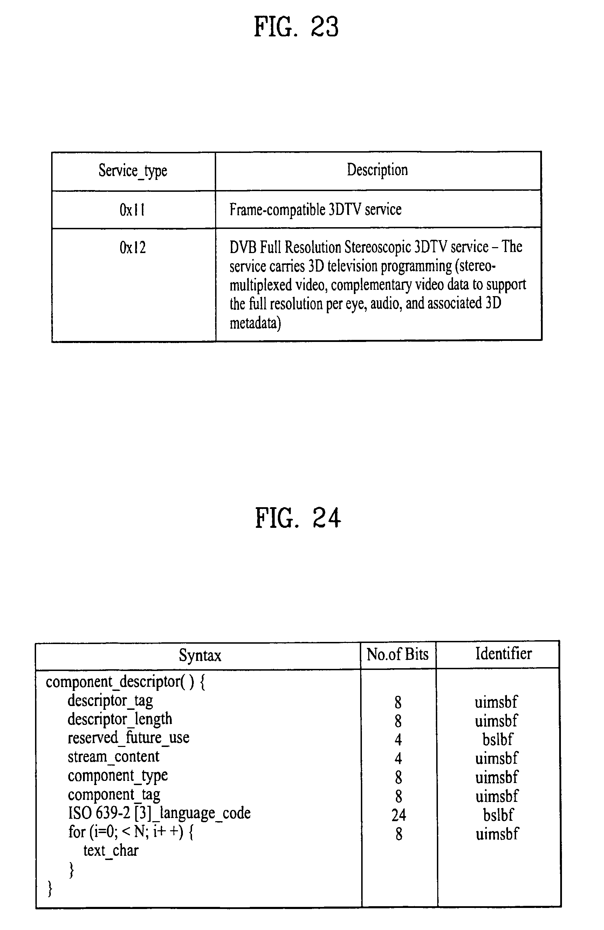

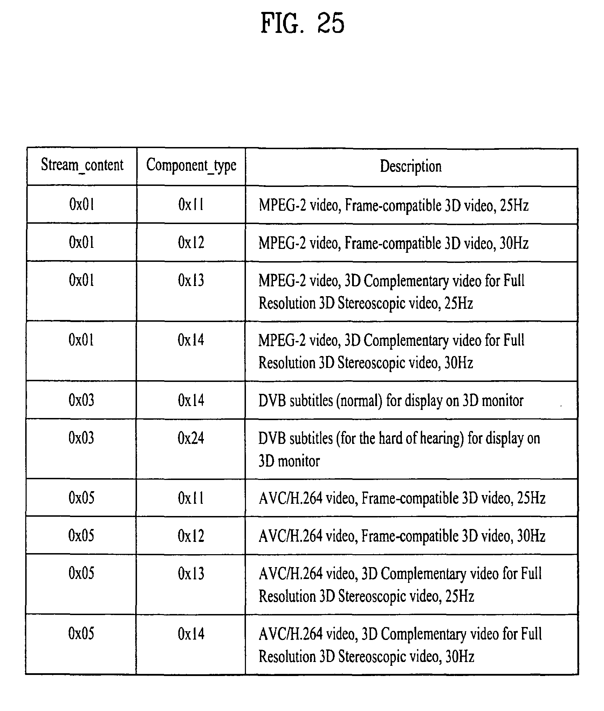

FIG. 23 illustrates the Service_type that is added to signal the 3DTV service using the SDT. FIG. 24 illustrates the syntax of the conventional component descriptor. And, FIG. 25 illustrates the definition and description of stream_content and component_type to indicate full-resolution 3D stereoscopic Service in a DVB broadcast system.

Each elementary stream configured for DVB service signals by adding component descriptor in the descriptor of the SDT. In the present invention, stream_content and component_type is defined as shown in FIG. 25 to separate 3D complementary video to provide full-resolution 3D stereoscopic service. For MPEG-2 video, stream type which indicates the type of the stream is defined as 0x01 and for H.264 video, it is defined to be 0x05.

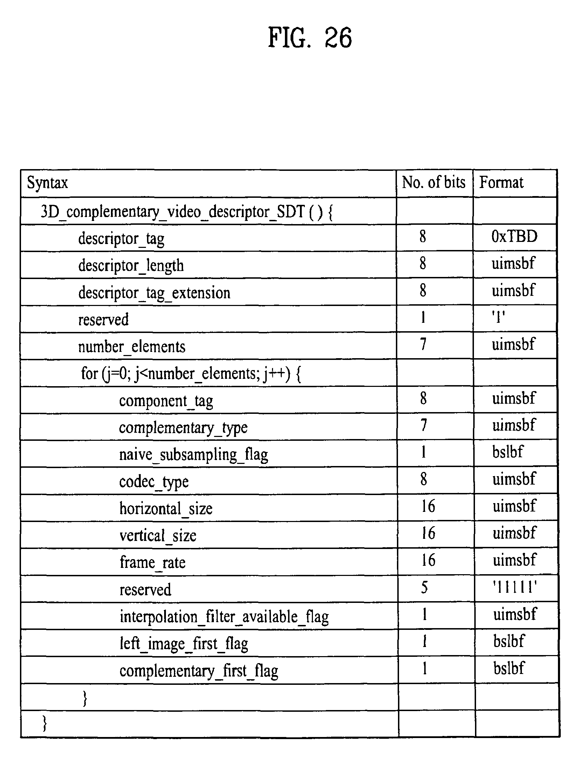

FIG. 26 illustrates a syntax structure of a 3D complementary video descriptor included in a SDT according to an embodiment of the present invention.

The 3D_complementary_video_descriptor_SDT is located in the descriptor of descriptors_loop_length field in the SDT and includes information regarding 3D complementary elementary stream. The meaning of each field is the same with the 3D-complementary_video_descriptor-VCT as illustrated in FIG. 11. The codec_type may be replaced with stream_content and component_type field within component descriptor in the SDT and in such a case it may also be omitted from the 3D complementary video descriptor.

Further, component_tag may be used to indicate the relationship with ES of the ES_loop of the PMT and component descriptor.

The receiver operation process for receiving 3D complementary video descriptor through TVCT will be explained.

First, using the service_type of TVCT, whether the corresponding virtual channel provides full-resolution stereoscopic 3DTV service is determined. Also, receiver supporting Spec-B is able to determine whether full-resolution stereoscopic 3DTV service is provided or not by the existence of 3D complementary video descriptor by using the same service_type as half-resolution stereoscopic 3DTV service.

Next, if full-resolution stereoscopic 3DTV service is provided, elementary_PID information (PID_B) of 3D stereo base video component is received using the stereo format descriptor.

Then, elementary PID information (PID_C) regarding complementary video component is received using the 3D Complementary video descriptor.

The base video corresponding to PID_B is decoded and then the complementary video signal corresponding to PID_C is decoded.

The left and right image of full resolution is acquired by combining base video and complementary video signal using the complementary_type, left_image_first_flag, and complementary_first_flag included in the 3D complementary video descriptor. Then left and right image is outputted to full-resolution stereoscopic display to provide 3D display to the user.

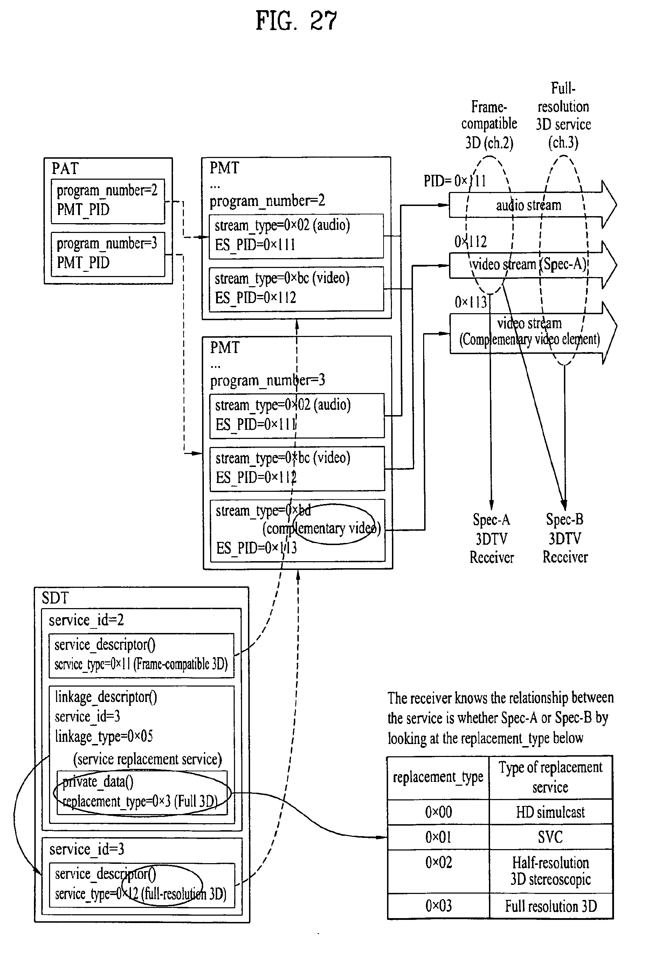

FIG. 27 illustrates how 3D complementary video descriptor is received through PMT according to an embodiment of the present invention.

First, the stream corresponding to Spec-A form the elementary stream signaled from PMT is identified. Next, complementary video stream from elementary stream signaling from PMT is identified. Using the program_number field and the information provided through TVCT, mapping is performed. Then base video is decoded along with decoding the complementary video signal.

Then, full resolution is acquired with left and right image. Finally, full-resolution stereoscopic display is displayed as 3D to the user.

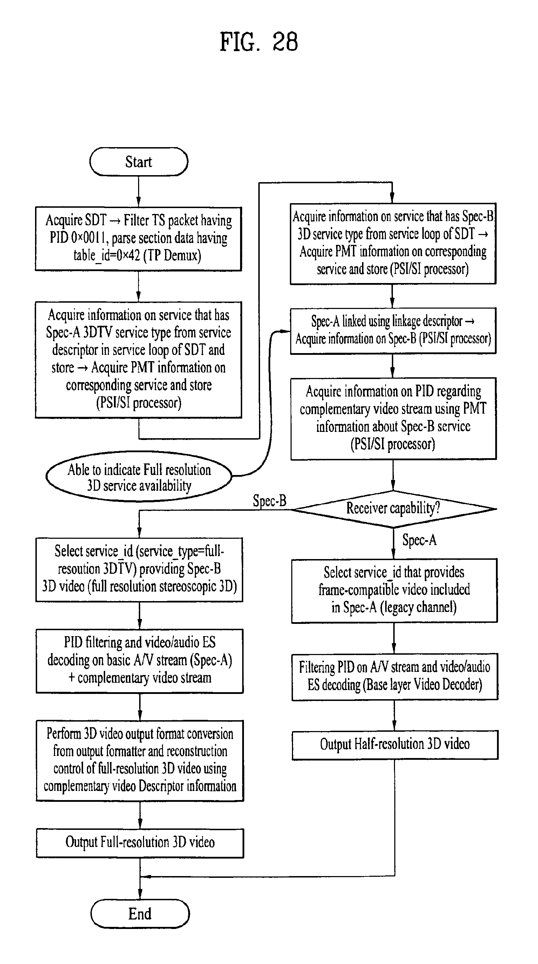

FIG. 28 illustrates a flow process for outputting stereoscopic video signal by parsing 3D signal. The process is explained below.

First SDT is acquired and the TS packet is being filtered. Then PMT information on corresponding service is acquired. By looking into the service loop within the SDT, Spec-B 3D service type information is acquired and stored. The PMT information corresponding to the service is acquired and stored. Through the linkage descriptor Spec-A and Spec-B information is determined. The PMT information for Spec-B is used to determine the PID information for complementary video stream.

If the receiver is capable of receiving Spec-B then service_id providing Spec-B 3D video is selected and together with conventional A/V stream and PID filter of the complementary video stream, ES decoding on video/audio is performed. Then full-resolution 3D video is outputted by reconstruction control and conversion of 3D video output is performed using Complementary video Descriptor information.

If the receiver is capable of receiving Spec-A, the service_id provided by frame-compatible video included in Spec-A is selected. Then video/audio ES decoding and PID filter is performed on A/V stream. Finally, Half-resolution 3D video is outputted.

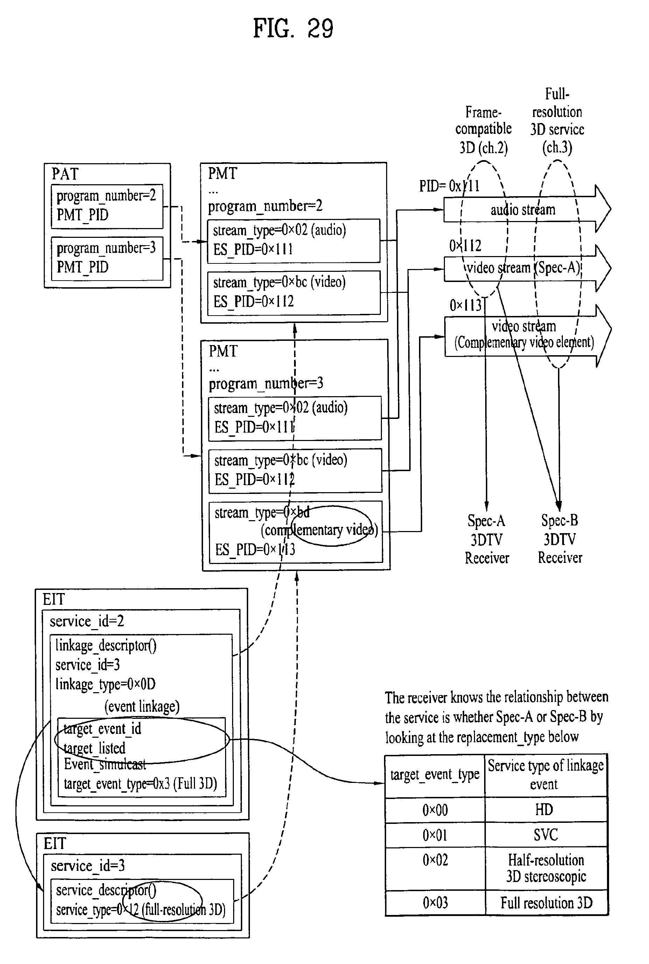

FIG. 29 illustrates in detail of the process of expanding event linkage for linking Spec-A event and Spec-B event. In the conventional SD event and HD event, separate information on the target event service type was not provided. By expanding the target_event type, 2D HD, Half-resolution 3D, Full resolution 3D is now distinguishable. And based on it, there is now a link between Half-resolution 3D event and Full resolution 3D event.

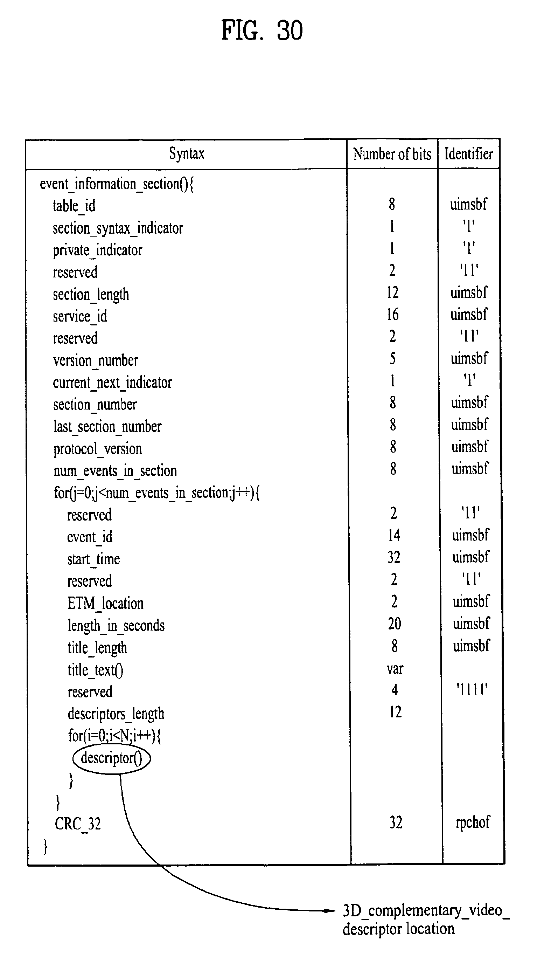

FIG. 30 illustrates that location of 3D_complementary_video_descriptor is in the event_information_table_section() to provide full-resolution 3D TV service guide for ATSC PSIP EIT.

The descriptor() is inside the for loop to indicate whether full-resolution 3D TV service is available for each program and event.

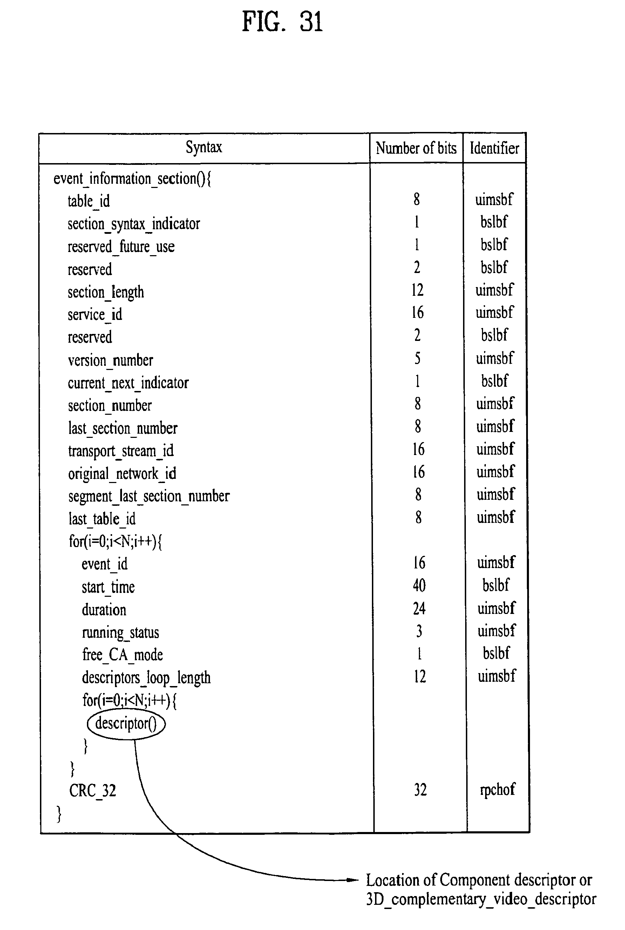

FIG. 31 indicates that component descriptor or 3D_complementary_video_descriptor's location within the for loop of event_information_section() of DVB SI EIT.

As mentioned above, in ATSC transmission, 3D_Complementary_video_descriptor_TVCT is included in EIT to signal full-resolution 3DTV and for DVB, in addition to the same method for ATSC, component descriptor is utilized as well.

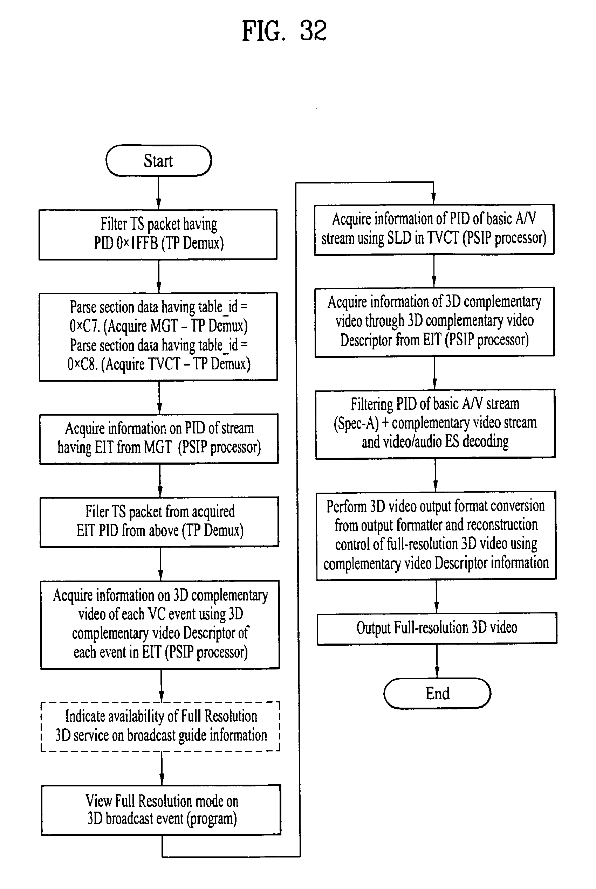

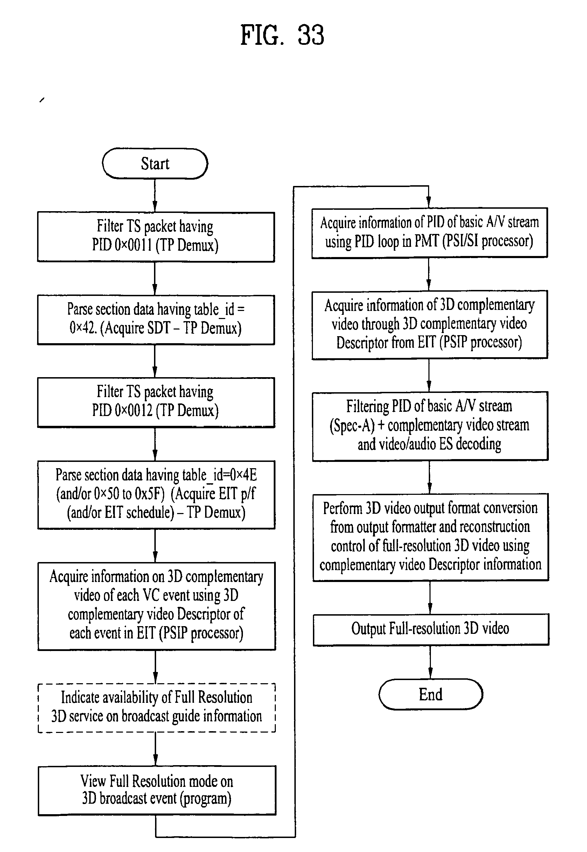

FIG. 32 illustrates the process of parsing and rendering 3D complementary video Descriptor for ATSC PSIP EIT and FIG. 33 illustrates the process for DVB SI EIT.

For ATSC PSIP EIT, filtering is performed for TS packet having PID value of 0x1FFB. Then section data having table id equal to 0xC7 and 0xC8 are parsed. Then information on PID of stream having EIT from MGT is acquired. Then TS packet from acquired EIT PID is filtered. Information on 3D complementary video of each VC event using 3D complementary video Descriptor of each event in EIT is acquired.

Then availability of full-resolution 3D service on broadcast guide information is indicated to view full-resolution mode on 3D broadcast event. Next, information of PID of basic A/V stream using SLD in TVCT is acquired. Acquiring information of 3D complementary video through 3D complementary video Descriptor from EIT is performed. Next filtering PID of basic A/V stream is performed as well and ES decoding video/audio.

Finally output of full-resolution 3D video is performed by conversion from output formatter and reconstruction control of full-resolution 3D video using complementary video descriptor information.

FIG. 33 shows the process of parsing and rendering 3D complementary video Descriptor for DVB SI EIT.

First, TS packet is filtered for PID value 0x0011. Then section data having table_id=0x42 is parsed. TS packet having PID 0x0012 is filtered and section data having table_id=0x4E is parsed. The difference between the ATSC and DVB is that in DVB, 3D complementary video Descriptor or component descriptor can be used to determine the existence of 3D complementary video stream.

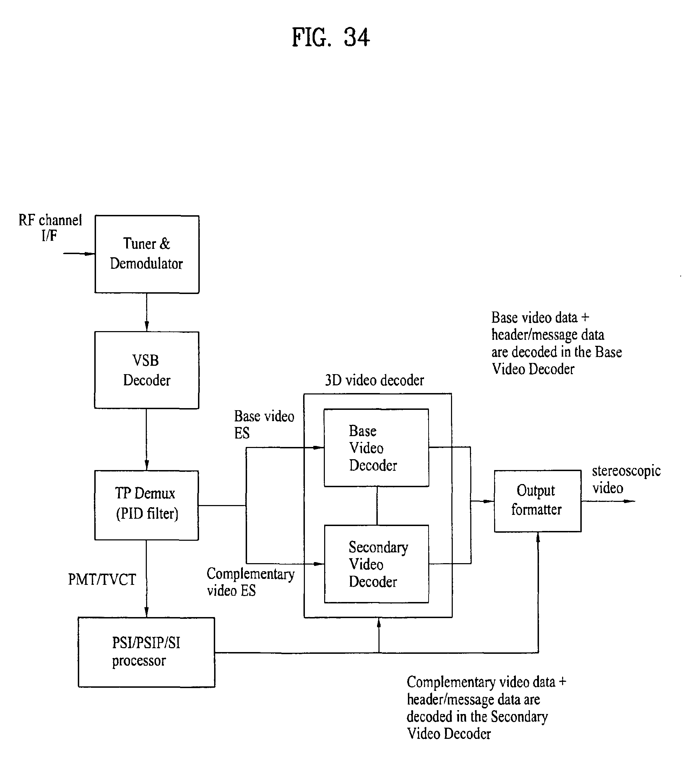

Lastly, FIG. 34 illustrates a block diagram of broadcasting receiver having 3D video decoder.

Video streams in two layers pass through new-generation broadcasting receiver and base-layer video stream is decoded in the primary video decoder.

Enhancement-layer video stream is decoded in the secondary video decoder. Further the PSI/PSIP/SI processor parses 3D stereoscopic information from new-generation ATSC spec and DVB spec where PMT/TVCT/SDT contains new signaling syntaxes to support 3D services. And the Next-generation receiver may convert full-resolution 3D video formats into specific stereoscopic formats according to kinds of 3DTV or 3D display.

As seen above with the detailed explanation, the present invention is intended to process 3D stereoscopic video distribution format data with forward and backward compatibility, and enable its display by using near-term and next-generation 3DTV.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A 3D video data processing method of a broadcast receiver, comprising:
receiving by a receiving unit, a broadcast signal including 3D video data and 3D complementary video information, wherein the 3D video data include half-resolution base video data and complementary video data for configuring a full-resolution image;
parsing by 3D video information processing unit, the 3D complementary video information;
decoding by a base video decoder, the half-resolution base video data;
decoding by a complementary video decoder, the complementary video data for configuring a full-resolution image;
acquiring and storing by a Program and System Information Protocol (PSIP) processor 3D complementary video information through 3D complementary video descriptor in Event Information Table (EIT); and
combining and formatting by an output formatter, the base video data and the complementary video data using the 3D complementary video information, thereby outputting a full-resolution 3D image.

2. The method of claim 1, wherein the 3D complementary video information is included in a Program Map Table (PMT) or Terrestrial Virtual Channel Table (TVCT).

3. The method of claim 1, wherein the 3D complementary video information is included in header information of a video ES of the complementary video data.

4. The method of claim 1, wherein the 3D complementary video information includes at least one of type information indicating a configuration type of the complementary video data, sub-sampling information indicating whether or not filtering is performed during sub-sampling, codec type information indicating the type of video codec used for encoding the complementary video data, horizontal size information, vertical size information, frame rate information, filter information for implementing a filter used during an interpolation procedure, perspective information indicating the image of which perspective is displayed first, and order information indicating a combination order of the base video data and the complementary video data.

5. A broadcast receiver, comprising
a receiving unit receiving a broadcast signal including 3D video data and 3D complementary video information, wherein the 3D video data include half-resolution base video data and complementary video data for configuring a full-resolution image;
a 3D video information processing unit parsing the 3D complementary video information;
a base video decoder decoding the half-resolution base video data;
a complementary video decoder decoding the complementary video data for configuring a full-resolution image;
a Program and System Information Protocol (PSIP) processor acquiring and storing 3D complementary video information through 3D complementary video descriptor in Event Information Table (EIT); and
an output formatter combining and formatting the base video data and the complementary video data using the 3D complementary video information, thereby outputting a full-resolution 3D image.

6. The broadcast receiver of claim 5, wherein the 3D complementary video information is included in a PMT or TVCT.

7. The broadcast receiver of claim 5, wherein the 3D complementary video information is included in header information of a video ES of the complementary video data.

8. The broadcast receiver of claim 5, wherein the 3D complementary video information includes at least one of type information indicating a configuration type of the complementary video data, sub-sampling information indicating whether or not filtering is performed during sub-sampling, codec type information indicating the type of video codec used for encoding the complementary video data, horizontal size information, vertical size information, frame rate information, filter information for implementing a filter used during an interpolation procedure, perspective information indicating the image of which perspective is displayed first, and order information indicating a combination order of the base video data and the complementary video data.

9. A 3D video data processing method of a broadcast receiver, comprising:
receiving by a receiving unit, a broadcast signal including 3D video data and 3D complementary video information, wherein the 3D video data include half-resolution base video data and complementary video data for configuring a full-resolution image;
parsing by 3D video information processing unit, the 3D complementary video information;
decoding by a base video decoder, the half-resolution base video data;
decoding by a complementary video decoder, the complementary video data for configuring a full-resolution image;
acquiring and storing by a Program Specific Information/Program and System Information Protocol (PSI/SI) processor 3D complementary video information through component descriptor in Event Information Table (EIT); and
combining and formatting by an output formatter, the base video data and the complementary video data using the 3D complementary video information, thereby outputting a full-resolution 3D image.

10. A broadcast receiver, comprising
a receiving unit receiving a broadcast signal including 3D video data and 3D complementary video information, wherein the 3D video data include half-resolution base video data and complementary video data for configuring a full-resolution image;
a 3D video information processing unit parsing the 3D complementary video information;
a base video decoder decoding the half-resolution base video data;
a complementary video decoder decoding the complementary video data for configuring a full-resolution image;
a Program Specific Information/Program and System Information Protocol (PSI/SI) processor acquiring and storing 3D complementary video information through component descriptor in Event Information Table (EIT); and
an output formatter combining and formatting the base video data and the complementary video data using the 3D complementary video information, thereby outputting a full-resolution 3D image.
